# EUROPEAN PATENT APPLICATION

(11) **EP 4 387 366 A1**
(43) Date of publication of application: **19.06.2024**
(21) Application number: 22874753.1
(22) Date of filing: 22.09.2022
(51) Int. Cl.: H04W 74/00

(54) **METHOD FOR CONTROLLING TRANSMISSION, AND RELATED APPARATUS**

(30) Priority: 28.09.2021 CN 202111146413; 21.10.2021 CN 202111228387
(71) Applicant: Huawei Technologies Co., Ltd., Shenzhen, Guangdong 518129 (CN)
(72) Inventor: ZHANG, Mengchen, Shenzhen, Guangdong 518129 (CN); XU, Haibo, Shenzhen, Guangdong 518129 (CN); KUANG, Yiru, Shenzhen, Guangdong 518129 (CN); AHLUWALIA, Jagdeep Singh, Shenzhen, Guangdong 518129 (CN)
(74) Representative: Pfenning, Meinig & Partner mbB
(86) International application number: PCT/CN2022/120459
(87) International publication number: WO 2023/051366

(57) **Abstract**

Embodiments of this application provide a transmission control method and a related apparatus. The method includes: When a first device is in a non-radio resource control RRC connected state, the first device sends first information or second information to a first network device, where the first information indicates to request to stop small data transmission SDT, and the second information indicates to request a gap configuration used for the SDT, or the second information indicates to request to suspend the SDT. Embodiments of this application may be applied to a scenario in which when the first device performs SDT, the first device may not continue the SDT, to avoid a case in which when the first device does not continue to monitor the SDT, the first network device continues to schedule a resource used for the SDT, so as to save air interface resources.

## Description

This application claims priority to Chinese Patent Application No. 202111146413.7, filed with the China National Intellectual Property Administration on September 28, 2021 and entitled "COMMUNICATION METHOD, TERMINAL, AND NETWORK DEVICE", and to Chinese Patent Application No. 202111228387.2, filed with the China National Intellectual Property Administration on October 21, 2021 and entitled "TRANSMISSION CONTROL METHOD AND RELATED APPARATUS", which are incorporated herein by reference in their entireties.

### TECHNICAL FIELD

This application relates to the field of communication technologies, and in particular, to a transmission control method and a related apparatus.

### BACKGROUND

A communication protocol stack between a terminal and a network device includes a radio resource control (radio resource control, RRC) layer. Currently, a terminal may transmit small data (small data) with a network device without entering an RRC connected (RRC CONNECTED) state, for example, the terminal is in an RRC idle (RRC IDLE) state or an RRC inactive (RRC INACTIVE) state. Such a process may be referred to as small data transmission (small data transmission, SDT).

When the terminal and the network device perform SDT, it is possible that the terminal cannot continue the SDT, but the network device still schedules a resource used for the SDT. Consequently, there is a problem of a waste of air interface resources, and there is no efficient transmission solution that can be applied to the foregoing scenario. For example, a multi-card terminal includes a subdevice A and a subdevice B. The subdevice A and the subdevice B share a radio frequency transmission chain and/or a radio frequency reception chain, that is, cannot simultaneously send information and/or receive information. When the subdevice A and a network device perform SDT, if the subdevice B has a data transmission requirement (for example, needs to perform non-SDT data transmission), the subdevice A needs to stop the transmission, so that the subdevice B can transmit information, but the network device still schedules, for the subdevice A, a resource used for the SDT.

### SUMMARY

Embodiments of this application disclose a transmission control method and a related apparatus, to avoid a case in which when a device does not monitor small data transmission, a network device continues to schedule a resource used for the small data transmission, so as to save air interface resources.

According to a first aspect, an embodiment of this application provides a transmission control method, applied to a first device. The method includes: sending first information to a first network device when the first device is in a non-radio resource control RRC connected state, where the first information indicates to request to stop small data transmission SDT.

In some embodiments, when the first network device initiates the SDT under the first network device, the first device sends the first information to the first network device.

In this application, the first device may send the first information to the first network device, and indicate, by using the first information, to request to stop the SDT, to avoid a case in which when the first device stops monitoring the SDT, the first network device still schedules, for the first device, a resource used for the SDT, so as to save air interface resources.

In a possible implementation, the first device is a multi-card terminal, the first device includes a first subdevice and a second subdevice, the first subdevice and the second subdevice share a radio frequency transmission chain and/or a radio frequency reception chain, and the sending first information to a first network device includes: sending the first information to the first network device through the first subdevice, where the first information indicates the first subdevice to request to stop the SDT; or the first information indicates to request to stop the SDT of the first subdevice.

In a possible implementation, the sending first information to a first network device includes: when the second subdevice needs to enter an RRC connected state from the non-RRC connected state, sending the first information to the first network device through the first subdevice; the sending first information to a first network device includes: when the first device needs to switch from an SDT service to an RRC connected state service, sending the first information to the first network device; or the sending first information to a first network device includes: sending the first information to the first network device due to a multi-card reason.

In a possible implementation, the first device is a first subdevice included in a multi-card terminal, the multi-card terminal further includes a second subdevice, and the first subdevice and the second subdevice share a radio frequency transmission chain and/or a radio frequency reception chain; and the first information indicates the first device to request to stop the SDT; or the first information indicates to request to stop the SDT of the first device.

In a possible implementation, the sending first information to a first network device includes: when the second subdevice needs to enter an RRC connected state from a non-RRC connected state, sending the first information to the first network device; the sending first information to a first network device includes: when the multi-card terminal needs to switch from an SDT service to an RRC connected state service, sending the first information to the first network device; or the sending first information to a first network device includes: sending the first information to the first network device due to a multi-card reason.

In this application, the first information may be applied to a plurality of scenarios of the multi-card terminal, application scenarios are wide, and product availability is high.

In a possible implementation, that the first device is in a non-radio resource control RRC connected state includes: The first subdevice is in an RRC inactive state. The method further includes: The first subdevice starts a first timer when the first information is sent to the first network device. After the sending first information to a first network device, the method further includes: Before the first timer expires, if a first response message sent by the first network device is received, the first subdevice stops the first timer; and when the first timer expires, if the first response message sent by the first network device is not received, the first subdevice enters an RRC idle state.

In a possible implementation, before the sending first information to a first network device, the method further includes: receiving first configuration information through the first subdevice, where the first configuration information indicates reporting of the first information, where the receiving first configuration information through the first subdevice includes: receiving, through the first subdevice, the first configuration information sent by the first network device by using broadcast system information; the receiving first configuration information through the first subdevice includes: receiving, through the first subdevice, the first configuration information sent by the first network device by using an RRC message; or the receiving first configuration information through the first subdevice includes: receiving, through the first subdevice, the first configuration information sent by a second network device by using an RRC message, where the second network device is an anchor device that stores a user context of the first subdevice, and the first network device does not store the user context of the first subdevice; and the first configuration information includes duration of the first timer; or the method further includes: receiving, through the first subdevice, duration that is of the first timer and that is sent by the first network device by using broadcast system information; the method further includes: receiving, through the first subdevice, duration that is of the first timer and that is sent by the first network device by using an RRC message; or the method further includes: receiving, through the first subdevice, duration that is of the first timer and that is sent by the second network device by using an RRC message, where the second network device is the anchor device that stores the user context of the first subdevice, and the first network device does not store the user context of the first subdevice; or the duration of the first timer is predefined, where the first timer is used by the first subdevice to monitor a response message for the first information.

In this application, there are various manners of configuring the first configuration information and/or the first timer for the first subdevice, and different manners may be used based on specific scenarios. Application scenarios are wide, and use is more flexible.

In a possible implementation, before the receiving first configuration information through the first subdevice, the method further includes: sending a first request message through the first subdevice, where the first request message indicates to request to configure the reporting of the first information.

In this application, the first device may first request to configure the reporting of the first information, and then the network device that receives the request configures the reporting of the first information for the first device. This avoids a waste of resources caused by an additional configuration when the first device does not need to configure the reporting of the first information, and reduces unnecessary signaling overheads.

In a possible implementation, the first response message is an RRC release message.

In a possible implementation, the first information is sent by using an RRC message carried on a dedicated control channel DCCH.

According to a second aspect, an embodiment of this application provides another transmission control method, applied to a first network device. The method includes: receiving first information sent by a first device, where the first information indicates to request to stop SDT.

In some embodiments, the first device is in a non-RRC connected state. In some embodiments, the first device initiates the SDT under the first network device.

In this application, the first device may send the first information to the first network device, and indicate, by using the first information, to request to stop the SDT, to avoid a case in which when the first device stops monitoring the SDT, the first network device still schedules, for the first device, a resource used for the SDT, so as to save air interface resources.

In a possible implementation, the first device is a multi-card terminal, the first device includes a first subdevice and a second subdevice, the first subdevice and the second subdevice share a radio frequency transmission chain and/or a radio frequency reception chain, and the receiving first information sent by a first device includes: receiving the first information sent by the first subdevice, where the first information indicates the first subdevice to request to stop the SDT; or the first information indicates to request to stop the SDT of the first subdevice.

In a possible implementation, the first information is sent by the first subdevice to the first network device when the second subdevice needs to enter an RRC connected state from a non-RRC connected state; the first information is sent to the first network device when the first device needs to switch from an SDT service to an RRC connected state service; or the first information is sent by the first device to the first network device due to a multi-card reason.

In a possible implementation, the first device is a first subdevice included in a multi-card terminal, the multi-card terminal further includes a second subdevice, and the first subdevice and the second subdevice share a radio frequency transmission chain and/or a radio frequency reception chain; and the first information indicates the first device to request to stop the SDT; or the first information indicates to request to stop the SDT of the first device.

In a possible implementation, the first information is sent by the first device to the first network device when the second subdevice needs to enter an RRC connected state from a non-RRC connected state; the first information is sent by the first device to the first network device when the multi-card terminal needs to switch from an SDT service to an RRC connected state service; or the first information is sent by the first device to the first network device due to a multi-card reason.

In this application, the first information may be applied to a plurality of scenarios of the multi-card terminal, application scenarios are wide, and product availability is high.

In a possible implementation, before the receiving first information sent by a first device, the method further includes:
sending first configuration information to the first subdevice, and/or sending duration of a first timer to the first subdevice, where the first configuration information indicates reporting of the first information, and the first timer is used by the first subdevice to monitor a response message for the first information, where the sending first configuration information to the first subdevice includes: sending the first configuration information to the first subdevice by using broadcast system information; or the sending first configuration information to the first subdevice includes: sending the first configuration information to the first subdevice by using an RRC message, where the first configuration information includes the duration of the first timer; or the sending duration of a first timer to the first subdevice includes: sending the duration of the first timer to the first subdevice by using broadcast system information; or the sending duration of a first timer to the first subdevice includes: sending the duration of the first timer to the first subdevice by using an RRC message; or the duration of the first timer is predefined.

In this application, there are various manners of configuring the first configuration information and/or the first timer for the first subdevice, and different manners may be used based on specific scenarios. Application scenarios are wide, and use is more flexible.

In a possible implementation, after the receiving first information sent by a first device, the method further includes: before the first timer expires, sending a first response message to the first subdevice.

In a possible implementation, the first network device does not store a user context of the first subdevice; and after the receiving first information sent by a first device, the method further includes: sending a first message to a second network device, where the first message includes the first information, and the second network device is an anchor device that stores the user context of the first subdevice.

In a possible implementation, the method further includes: receiving a second message sent by the second network device, where the second message includes the first response message, the second network device is the anchor device that stores the user context of the first subdevice, and the second message is used by the first network device to send the first response message to the first subdevice.

In a possible implementation, after the receiving first information sent by a first device, the method further includes: receiving a third message sent by the second network device, where the second network device is the anchor device that stores the user context of the first subdevice, the user context of the first subdevice includes the duration of the first timer, the third message includes the duration of the first timer, and the duration of the first timer is used by the first network device to send the first response message to the first subdevice before the first timer expires.

In some embodiments, the second message is the same as the third message. In some other embodiments, the second message is different from the third message.

In a possible implementation, before the receiving a second message sent by the second network device, the method further includes: sending a fourth message to the second network device, where the fourth message includes the duration of the first timer, the duration of the first timer is generated by the first network device, and the duration of the first timer is used by the second network device to send the second message to the first network device.

In a possible implementation, before the receiving first information sent by a first device, the method further includes: receiving a fifth message sent by the second network device, where the second network device is the anchor device that stores the user context of the first subdevice, the fifth message includes the duration of the first timer, and the duration of the first timer is used by the first network device to send the first response message to the first subdevice before the first timer expires.

In this application, the duration of the first timer is transmitted between the first network device and the second network device in various manners, and different manners may be used based on specific scenarios. Application scenarios are wide, and use is more flexible.

In a possible implementation, before the sending first configuration information to the first subdevice, the method further includes: receiving a first request message sent by the first subdevice, where the first request message indicates to request to configure the reporting of the first information.

In this application, the first device may first request to configure the reporting of the first information, and then the network device that receives the request configures the first information for the first device. This avoids a waste of resources caused by additionally configuring the first information when the first device does not need to configure the first information, and reduces unnecessary signaling overheads.

In a possible implementation, the first response message is an RRC release message.

In a possible implementation, the first information is sent by using an RRC message carried on a dedicated control channel DCCH.

According to a third aspect, an embodiment of this application provides another transmission control method, applied to a second network device. The method includes: receiving a first message sent by a first network device, where the first message includes first information, the first information indicates a first device to request to stop SDT, the first network device does not store a user context of the first device, and the second network device is an anchor device that stores the user context of the first device.

In some embodiments, the first information is sent by the first device to the first network device. Optionally, the first information is sent when the first device is in a non-RRC connected state. Optionally, the first information is sent when the first device initiates the SDT under the first network device.

In this application, the first device may send the first information to the first network device, and indicate, by using the first information, to request to stop the SDT, to avoid a case in which when the first device stops monitoring the SDT, the first network device still schedules, for the first device, a resource used for the SDT, so as to save air interface resources.

In a possible implementation, the first device is a multi-card terminal, the first device includes a first subdevice and a second subdevice, and the first subdevice and the second subdevice share a radio frequency transmission chain and/or a radio frequency reception chain; that the first network device does not store a user context of the first device includes: the first network device does not store a user context of the first subdevice; and that the second network device is an anchor device that stores the user context of the first device includes: the second network device is an anchor device that stores the user context of the first subdevice, where the first information indicates the first subdevice to request to stop the SDT; or the first information indicates to request to stop the SDT of the first subdevice.

In a possible implementation, the first information is sent by the first subdevice to the first network device when the second subdevice needs to enter an RRC connected state from a non-RRC connected state; the first information is sent to the first network device when the first device needs to switch from an SDT service to an RRC connected state service; or the first information is sent by the first device to the first network device due to a multi-card reason.

In a possible implementation, the first device is a first subdevice included in a multi-card terminal, the multi-card terminal further includes a second subdevice, and the first subdevice and the second subdevice share a radio frequency transmission chain and/or a radio frequency reception chain; and the first information indicates the first device to request to stop the SDT; or the first information indicates to request to stop the SDT of the first device.

In a possible implementation, the first information is sent by the first device to the first network device when the second subdevice needs to enter an RRC connected state from a non-RRC connected state; the first information is sent by the first device to the first network device when the multi-card terminal needs to switch from an SDT service to an RRC connected state service; or the first information is sent by the first device to the first network device due to a multi-card reason.

In this application, the first information may be applied to a plurality of scenarios of the multi-card terminal, application scenarios are wide, and product availability is high.

In a possible implementation, before the receiving a first message sent by a first network device, the method further includes: sending first configuration information to the first subdevice by using an RRC message, and/or sending duration of a first timer to the first subdevice by using an RRC message, where the first configuration information indicates reporting of the first information, and the first timer is used by the first subdevice to monitor a response message for the first information; and the first configuration information includes the duration of the first timer; or the duration of the first timer is predefined.

In this application, there are various manners of configuring the first configuration information and/or the first timer for the first subdevice, and different manners may be used based on specific scenarios. Application scenarios are wide, and use is more flexible.

In a possible implementation, the method further includes: sending a second message to the first network device, where the second message includes a first response message, and the second message is used by the first network device to send the first response message to the first subdevice.

In a possible implementation, the method further includes: sending a third message to the first network device, where the third message includes the duration of the first timer, and the duration of the first timer is used by the first network device to send the first response message to the first subdevice before the first timer expires.

In some embodiments, the second message is the same as the third message. In some other embodiments, the second message is different from the third message.

In a possible implementation, before the sending a second message to the first network device, the method further includes: receiving a fourth message sent by the first network device, where the fourth message includes the duration of the first timer, the duration of the first timer is generated by the first network device, and the duration of the first timer is used by the second network device to send the second message to the first network device.

In a possible implementation, the method further includes: sending a fifth message to the first network device, where the fifth message includes the duration of the first timer, the fifth message is received before the first network device receives the first information sent by the first subdevice, and the duration of the first timer is used by the first network device to send the first response message to the first subdevice before the first timer expires.

In this application, the duration of the first timer is transmitted between the first network device and the second network device in various manners, and different manners may be used based on specific scenarios. Application scenarios are wide, and use is more flexible.

In a possible implementation, the first response message is an RRC release message.

In a possible implementation, the first information is sent by using an RRC message carried on a dedicated control channel DCCH.

According to a fourth aspect, an embodiment of this application provides another transmission control method, applied to a first device. The method includes: sending second information to a first network device when the first network device is in a non-RRC connected state, where the second information indicates to request a gap configuration used for SDT; or the second information indicates to request to suspend SDT.

In some embodiments, when the first network device initiates the SDT under the first network device, the first device sends the second information to the first network device.

In this application, the first device may send the second information to the first network device, and indicate, by using the second information, to request to suspend the SDT or request the gap configuration used for the SDT, to avoid a case in which when the first device stops monitoring the SDT, the first network device still schedules, for the first device, a resource used for the SDT, so as to save air interface resources.

In a possible implementation, the first device is a multi-card terminal, the first device includes a first subdevice and a second subdevice, the first subdevice and the second subdevice share a radio frequency transmission chain and/or a radio frequency reception chain, and the sending second information to a first network device includes: sending the second information to the first network device through the first subdevice, where the second information indicates the first subdevice to request the gap configuration used for the SDT; the second information indicates to request the gap configuration used for the SDT of the first subdevice; the second information indicates the first subdevice to request to suspend the SDT; or the second information indicates to request to suspend the SDT of the first subdevice.

In a possible implementation, the sending second information to a first network device includes: when the second subdevice needs to send a system information request or receive a downlink message, sending, by the first subdevice, the second information to the first network device; the sending second information to a first network device includes: when the first device needs to switch from an SDT service to a service of sending a system information request or receiving a downlink message, sending the second information to the first network device; or the sending second information to a first network device includes: sending the second information to the first network device due to a multi-card reason.

In a possible implementation, the first device is a first subdevice included in a multi-card terminal, the multi-card terminal further includes a second subdevice, the first subdevice and the second subdevice share a radio frequency transmission chain and/or a radio frequency reception chain, and the second information indicates the first device to request the gap configuration used for the SDT; the second information indicates to request the gap configuration used for the SDT of the first device; the second information indicates the first device to request to suspend the SDT; or the second information indicates to request to suspend the SDT of the first device.

In a possible implementation, the sending second information to a first network device includes: when the second subdevice needs to send a system information request or receive a downlink message, sending the second information to the first network device; the sending second information to a first network device includes: when the multi-card terminal needs to switch from an SDT service to a service of sending a system information request or receiving a downlink message, sending the second information to the first network device; or the sending second information to a first network device includes: sending the second information to the first network device due to a multi-card reason.

In this application, the first information may be applied to a plurality of scenarios of the multi-card terminal, application scenarios are wide, and product availability is high.

In a possible implementation, that the first network device is in a non-RRC connected state includes: The first subdevice is in an RRC inactive state. The method further includes: The first subdevice starts a second timer when sending the second information to the first network device. After the sending second information to a first network device, the method further includes: If a second response message sent by the first network device is received before the second timer expires, the first subdevice stops the second timer; and the first subdevice processes the SDT based on the second response message.

In a possible implementation, the second response message includes third information, the third information indicates the gap configuration, and that the first subdevice processes the SDT based on the second response message includes: The first subdevice stops monitoring the SDT in a time period indicated by the gap configuration, and performs SDT with the first network device in a time period other than the time period indicated by the gap configuration.

In this application, the first device may not stop the current SDT, and continues the SDT when the SDT can be performed, to reduce signaling overheads and improve transmission efficiency.

In a possible implementation, before the sending second information to a first network device, the method further includes: receiving second configuration information through the first subdevice, where the second configuration information indicates reporting of the second information, and the receiving second configuration information through the first subdevice includes: receiving, through the first subdevice, the second configuration information sent by the first network device by using broadcast system information; the receiving second configuration information through the first subdevice includes: receiving, through the first subdevice, the second configuration information sent by the first network device by using an RRC message; or the receiving second configuration information through the first subdevice includes: receiving, through the first subdevice, the second configuration information sent by a second network device by using an RRC message, where the second network device is an anchor device that stores a user context of the first subdevice, and the first network device does not store the user context of the first subdevice; and the second configuration information includes duration of the second timer; or the method further includes: receiving, through the first subdevice, duration that is of the second timer and that is sent by the first network device by using broadcast system information; the method further includes: receiving, through the first subdevice, duration that is of the second timer and that is sent by the first network device by using an RRC message; or the method further includes: receiving, through the first subdevice, duration that is of the second timer and that is sent by the second network device by using an RRC message, where the second network device is the anchor device that stores the user context of the first subdevice, and the first network device does not store the user context of the first subdevice; or the duration of the second timer is predefined, where the second timer is used by the first subdevice to monitor a response message for the second information.

In this application, there are various manners of configuring the second configuration information and/or the second timer for the first subdevice, and different manners may be used based on specific scenarios. Application scenarios are wide, and use is more flexible.

In a possible implementation, before the receiving second configuration information through the first subdevice, the method further includes: sending a second request message through the first subdevice, where the second request message indicates to request to configure the reporting of the second information.

In this application, the first device may first request to configure the reporting of the second information, and then the network device that receives the request configures the reporting of the second information for the first device. This avoids a waste of resources caused by an additional configuration when the first device does not need to configure the reporting of the second information, and reduces unnecessary signaling overheads.

In a possible implementation, the second response message is an RRC reconfiguration message.

In a possible implementation, the second information is sent by using an RRC message carried on a dedicated control channel DCCH.

According to a fifth aspect, an embodiment of this application provides another transmission control method, applied to a first network device. The method includes: receiving second information sent by a first device, where the second information indicates to request a gap configuration used for SDT; or the second information indicates to request to suspend SDT.

In some embodiments, the first device is in a non-RRC connected state. In some embodiments, the first device initiates the SDT under the first network device.

In this application, the first device may send the second information to the first network device, and indicate, by using the second information, to request to suspend the SDT or request the gap configuration used for the SDT, to avoid a case in which when the first device stops monitoring the SDT, the first network device still schedules, for the first device, a resource used for the SDT, so as to save air interface resources.

In a possible implementation, the first device is a multi-card terminal, the first device includes a first subdevice and a second subdevice, the first subdevice and the second subdevice share a radio frequency transmission chain and/or a radio frequency reception chain, and the receiving second information sent by a first device includes: receiving the second information sent by the first subdevice, where the second information indicates the first subdevice to request the gap configuration used for the SDT; the second information indicates to request the gap configuration used for the SDT of the first subdevice; the second information indicates the first subdevice to request to suspend the SDT; or the second information indicates to request to suspend the SDT of the first subdevice.

In a possible implementation, the second information is sent by the first subdevice to the first network device when the second subdevice needs to send a system information request or receive a downlink message; the second information is sent by the first device to the first network device when the first device needs to switch from an SDT service to a service of sending a system information request or receiving a downlink message; or the second information is sent by the first device to the first network device due to a multi-card reason.

In a possible implementation, the first device is a first subdevice included in a multi-card terminal, the multi-card terminal further includes a second subdevice, the first subdevice and the second subdevice share a radio frequency transmission chain and/or a radio frequency reception chain, and the second information indicates the first device to request the gap configuration used for the SDT; the second information indicates to request the gap configuration used for the SDT of the first device; the second information indicates the first device to request to suspend the SDT; or the second information indicates to request to suspend the SDT of the first device.

In a possible implementation, the second information is sent by the first device to the first network device when the second subdevice needs to send a system information request or receive a downlink message; the second information is sent by the first device to the first network device when the multi-card terminal needs to switch from an SDT service to a service of sending a system information request or receiving a downlink message; or the second information is sent by the first device to the first network device due to a multi-card reason.

In this application, the first information may be applied to a plurality of scenarios of the multi-card terminal, application scenarios are wide, and product availability is high.

In a possible implementation, before the receiving second information sent by a first device, the method further includes: sending second configuration information to the first subdevice, and/or sending duration of a second timer to the first subdevice, where the second configuration information indicates reporting of the second information, and the second timer is used by the first subdevice to monitor a response message for the second information, where the sending second configuration information to the first subdevice includes: sending the second configuration information to the first subdevice by using broadcast system information; or the sending second configuration information to the first subdevice includes: sending the second configuration information to the first subdevice by using an RRC message, where the second configuration information includes the duration of the second timer; or the sending duration of a second timer to the first subdevice includes: sending the duration of the second timer to the first subdevice by using broadcast system information; or the sending duration of a second timer to the first subdevice includes: sending the duration of the second timer to the first subdevice by using an RRC message; or the duration of the second timer is predefined.

In this application, there are various manners of configuring the second configuration information and/or the second timer for the first subdevice, and different manners may be used based on specific scenarios. Application scenarios are wide, and use is more flexible.

In a possible implementation, after the receiving second information sent by a first device, the method further includes: before the second timer expires, sending a second response message to the first subdevice, where the second response message is used by the first subdevice to process the SDT.

In a possible implementation, the second response message includes third information, the third information indicates the gap configuration, and the gap configuration indicates a time period in which monitoring on the SDT is stopped.

In this application, the first device may not stop the current SDT, and continue the SDT when the SDT can be performed. For example, the first device stops monitoring the SDT in the time period indicated by the gap configuration, and continues the SDT other than the time period indicated by the gap configuration, to reduce signaling overheads and improve transmission efficiency.

In a possible implementation, after the receiving second information sent by a first device, the method further includes: sending a sixth message to a second network device, where the sixth message includes the second information, and the second network device is an anchor device that stores a user context of the first subdevice; and receiving a seventh message sent by the second network device, where the seventh message includes a second response message, the second response message is a response message for the second information, and the seventh message is used by the first network device to send the second response message to the first subdevice.

In a possible implementation, after the receiving second information sent by a first device, the method further includes: receiving an eighth message sent by a second network device, where the second network device is an anchor device that stores a user context of the first subdevice, the user context of the first subdevice includes the duration of the second timer, the eighth message includes the duration of the second timer, the duration of the second timer is used by the first network device to send a second response message to the first subdevice before the second timer expires, and the second response message is a response message for the second information.

In some embodiments, the seventh message is the same as the eighth message. In some other embodiments, the seventh message is different from the eighth message.

In a possible implementation, before the receiving a seventh message sent by the second network device, the method further includes: sending a ninth message to the second network device, where the ninth message includes the duration of the second timer, the duration of the second timer is generated by the first network device, the duration of the second timer is used by the second network device to send the seventh message to the first network device, and the seventh message is used by the first network device to send the second response message to the first subdevice before the second timer expires.

In a possible implementation, before the receiving second information sent by a first device, the method further includes: receiving a tenth message sent by a second network device, where the second network device is an anchor device that stores a user context of the first subdevice, the tenth message includes the duration of the second timer, the duration of the second timer is used by the first network device to send a second response message to the first subdevice before the second timer expires, and the second response message is a response message for the second information.

In this application, the duration of the second timer is transmitted between the first network device and the second network device in various manners, and different manners may be used based on specific scenarios. Application scenarios are wide, and use is more flexible.

In a possible implementation, the second response message includes third information, the third information indicates the gap configuration, the third information is generated by the second network device based on the second information and the duration of the second timer, and the duration of the second timer is used by the first network device to send the second response message to the first subdevice before the second timer expires; or after the sending a sixth message to a second network device, the method further includes: receiving an eleventh message sent by the second network device, where the eleventh message includes the second information; generating the third information based on the second information in the eleventh message; and sending a twelfth message to the second network device, where the twelfth message includes the third information.

In this application, the third information indicating the gap configuration may be generated by the second network device, or may be generated by the first network device, and different manners may be used based on specific scenarios, and use is more flexible.

In a possible implementation, before the sending second configuration information to the first subdevice, the method further includes: receiving a second request message sent by the first subdevice, where the second request message indicates to request to configure the reporting of the second information.

In this application, the first device may first request to configure the reporting of the second information, and then the network device that receives the request configures the reporting of the second information for the first device. This avoids a waste of resources caused by an additional configuration when the first device does not need to configure the reporting of the second information, and reduces unnecessary signaling overheads.

In a possible implementation, the second response message is an RRC reconfiguration message.

In a possible implementation, the second information is sent by using an RRC message carried on a dedicated control channel DCCH.

According to a sixth aspect, an embodiment of this application provides another transmission control method, applied to a second network device. The method includes: receiving a sixth message sent by a first network device, where the sixth message includes second information, the second information indicates a first device to request a gap configuration used for SDT; or the second information indicates the first device to request to suspend SDT, the first network device does not store a user context of the first device, and the second network device is an anchor device that stores the user context of the first device.

In some embodiments, the second information is sent by the first device to the first network device. Optionally, the second information is sent when the first device is in a non-RRC connected state. Optionally, the second information is sent when the first device initiates the SDT under the first network device.

In this application, the first device may send the second information to the first network device, and indicate, by using the second information, to request to suspend the SDT or request the gap configuration used for the SDT, to avoid a case in which when the first device stops monitoring the SDT, the first network device still schedules, for the first device, a resource used for the SDT, so as to save air interface resources.

In a possible implementation, the first device is a multi-card terminal, the first device includes a first subdevice and a second subdevice, and the first subdevice and the second subdevice share a radio frequency transmission chain and/or a radio frequency reception chain; that the first network device does not store a user context of the first device includes: the first network device does not store a user context of the first subdevice; and that the second network device is an anchor device that stores the user context of the first device includes: the second network device is an anchor device that stores the user context of the first subdevice, where the second information indicates the first subdevice to request the gap configuration used for the SDT; the second information indicates to request the gap configuration used for the SDT of the first subdevice; the second information indicates the first subdevice to request to suspend the SDT; or the second information indicates to request to suspend the SDT of the first subdevice.

In a possible implementation, the second information is sent by the first subdevice to the first network device when the second subdevice needs to send a system information request or receive a downlink message; the second information is sent by the first device to the first network device when the first device needs to switch from an SDT service to a service of sending a system information request or receiving a downlink message; or the second information is sent by the first device to the first network device due to a multi-card reason.

In a possible implementation, the first device is a first subdevice included in a multi-card terminal, the multi-card terminal further includes a second subdevice, the first subdevice and the second subdevice share a radio frequency transmission chain and/or a radio frequency reception chain, and the second information indicates the first device to request the gap configuration used for the SDT; the second information indicates to request the gap configuration used for the SDT of the first device; the second information indicates the first device to request to suspend the SDT; or the second information indicates to request to suspend the SDT of the first device.

In a possible implementation, the second information is sent by the first device to the first network device when the second subdevice needs to send a system information request or receive a downlink message; the second information is sent by the first device to the first network device when the multi-card terminal needs to switch from an SDT service to a service of sending a system information request or receiving a downlink message; or the second information is sent by the first device to the first network device due to a multi-card reason.

In this application, the second information may be applied to a plurality of scenarios of the multi-card terminal, application scenarios are wide, and product availability is high.

In a possible implementation, before the receiving a sixth message sent by a first network device, the method further includes: sending second configuration information to the first subdevice by using an RRC message, and/or sending duration of a second timer to the first subdevice by using an RRC message, where the second configuration information indicates reporting of the second information, the second timer is used by the first subdevice to monitor a response message for the second information; and the second configuration information includes the duration of the second timer; or the duration of the second timer is predefined.

In this application, there are various manners of configuring the second configuration information and/or the second timer for the first subdevice, and different manners may be used based on specific scenarios. Application scenarios are wide, and use is more flexible.

In a possible implementation, after the receiving a sixth message sent by a first network device, the method further includes: generating a second response message based on the duration of the second timer, where the second response message is a response message for the second information; and sending a seventh message to the first network device, where the seventh message includes the second response message, and the seventh message is used by the first network device to send the second response message to the first subdevice before the second timer expires.

In a possible implementation, the user context that is of the first subdevice and that is stored in the second network device includes the duration of the second timer; and the method further includes: sending an eighth message to the first network device, where the eighth message includes the duration of the second timer, the duration of the second timer is used by the first network device to send the second response message to the first subdevice before the second timer expires, and the second response message is a response message for the second information.

In some embodiments, the seventh message is the same as the eighth message. In some other embodiments, the seventh message is different from the eighth message.

In a possible implementation, before the sending a seventh message to the first network device, the method further includes: receiving a ninth message sent by the first network device, where the ninth message includes the duration of the second timer, the duration of the second timer is generated by the first network device, and the duration of the second timer is used by the second network device to send the seventh message to the first network device.

In a possible implementation, the method further includes: sending a tenth message to the first network device, where the tenth message includes the duration of the second timer, the tenth message is received before the first network device receives the second information sent by the first subdevice, the duration of the second timer is used by the first network device to send the second response message to the first subdevice before the second timer expires, and the second response message is a response message for the second information.

In this application, the duration of the second timer is transmitted between the first network device and the second network device in various manners, and different manners may be used based on specific scenarios. Application scenarios are wide, and use is more flexible.

In a possible implementation, the second response message includes third information, the third information indicates the gap configuration, and the gap configuration indicates a time period in which monitoring on the SDT is stopped.

In this application, the first device may not stop the current SDT, and continue the SDT when the SDT can be performed. For example, the first device stops monitoring the SDT in the time period indicated by the gap configuration, and continues the SDT other than the time period indicated by the gap configuration, to reduce signaling overheads and improve transmission efficiency.

In a possible implementation, the second response message includes third information, the third information indicates the gap configuration, and the third information is generated by the second network device based on the second information and the duration of the second timer; or after the receiving a sixth message sent by a first network device, the method further includes: sending an eleventh message to the first network device, where the eleventh message includes the second information, and the second information in the eleventh message is used by the first network device to generate the third information; and receiving a twelfth message sent by the first network device, where the twelfth message includes the third information.

In this application, the third information indicating the gap configuration may be generated by the second network device, or may be generated by the first network device, and different manners may be used based on specific scenarios, and use is more flexible.

In a possible implementation, the second response message is an RRC reconfiguration message.

In a possible implementation, the second information is sent by using an RRC message carried on a dedicated control channel DCCH.

According to a seventh aspect, an embodiment of this application provides another transmission control method, applied to a first communication system. The first communication system includes a first device and a first network device. The method includes: When a first device is in a non-RRC connected state, the first device sends indication information to the first network device, where the indication information indicates to stop monitoring SDT.

In a possible implementation, the indication information is the first information in the transmission control method according to any one of the first aspect to the third aspect and the implementations of the first aspect to the third aspect in embodiments of this application. The first device is configured to perform the transmission control method according to any one of the first aspect and the implementations of the first aspect in embodiments of this application. The first network device is configured to perform the transmission control method according to any one of the second aspect and the implementations of the second aspect in embodiments of this application. In some embodiments, the first communication system further includes a second network device, and the second network device is configured to perform the transmission control method according to any one of the third aspect and the implementations of the third aspect in embodiments of this application.

In a possible implementation, the indication information is the second information in the transmission control method according to any one of the fourth aspect to the sixth aspect and the implementations of the fourth aspect to the sixth aspect in embodiments of this application. The first device is configured to perform the transmission control method according to any one of the fourth aspect and the implementations of the fourth aspect in embodiments of this application. The first network device is configured to perform the transmission control method according to any one of the fifth aspect and the implementations of the fifth aspect in embodiments of this application. In some embodiments, the first communication system further includes a second network device, and the second network device is configured to perform the transmission control method according to any one of the sixth aspect and the implementations of the sixth aspect in embodiments of this application.

According to an eighth aspect, an embodiment of this application provides a network device, including a transceiver, a processor, and a memory. The memory is configured to store computer program code, the computer program code includes computer instructions, and the processor invokes the computer instructions to enable the network device to perform the transmission control method according to any one of the second aspect, the third aspect, the fifth aspect, the sixth aspect, and the seventh aspect and the implementations of the second aspect, the third aspect, the fifth aspect, the sixth aspect, and the seventh aspect in embodiments of this application.

According to a ninth aspect, an embodiment of this application provides an electronic device, including a transceiver, a processor, and a memory. The memory is configured to store computer program code, the computer program code includes computer instructions, and the processor invokes the computer instructions to enable the network device to perform the transmission control method according to any one of the first aspect, the fourth aspect, and the seventh aspect and the implementations of the first aspect, the fourth aspect, and the seventh aspect in embodiments of this application.

According to a tenth aspect, an embodiment of this application provides a communication apparatus. The apparatus may be a device or a chip in a device. The communication apparatus includes a processing unit, and the processing unit is configured to perform the transmission control method according to any one of the first aspect to the seventh aspect and the implementations of the first aspect to the seventh aspect in embodiments of this application.

According to an eleventh aspect, an embodiment of this application provides a computer storage medium. The computer storage medium stores a computer program, and the computer program includes program instructions. When the program instructions are executed by a processor, the processor is configured to perform the transmission control method according to any one of the first aspect to the seventh aspect and the implementations of the first aspect to the seventh aspect in embodiments of this application.

According to a twelfth aspect, an embodiment of this application provides a computer program product. When the computer program product runs on a communication device, the communication device is enabled to perform the transmission control method according to any one of the first aspect to the seventh aspect and the implementations of the first aspect to the seventh aspect in embodiments of this application.

According to a thirteenth aspect, an embodiment of this application provides an electronic device. The electronic device includes the method or apparatus for performing any embodiment of this application. For example, the electronic device is a chip.

### BRIEF DESCRIPTION OF DRAWINGS

The following describes accompanying drawings used in embodiments of this application.
FIG. 1 is a schematic diagram of an architecture of a communication system according to an embodiment of this application;
FIG. 2 is a schematic diagram of an architecture of a communication protocol stack of a user plane of new radio access NR;
FIG. 3 is a schematic diagram of an architecture of a communication protocol stack of a control plane of NR;
FIG. 4 is a schematic diagram of switching of a radio resource control RRC state of user equipment UE;
FIG. 5 to FIG. 10 are schematic flowcharts of some small data transmission SDT according to embodiments of this application;
FIG. 11 and FIG. 12 are schematic flowcharts of some anchor migration processes according to embodiments of this application; and
FIG. 13 to FIG. 19 are schematic flowcharts of some transmission control methods according to embodiments of this application.

### DESCRIPTION OF EMBODIMENTS

The following clearly describes the technical solutions in embodiments of this application with reference to the accompanying drawings. Terms used in implementations of embodiments of this application are merely used to explain specific embodiments of this application, and are not intended to limit this application.

First, related apparatuses and a communication system in this application are described.

Network device: The network device may be a device configured to send or receive information. In some embodiments, the network device includes an access network device, for example, but not limited to a base station, user equipment (user equipment, UE), a wireless access point (access point, AP), a transmission reception point (transmission reception point, TRP), a relay device, or another network device having a function of a base station. A base station is a device deployed in a radio access network (radio access network, RAN) to provide a wireless communication function. In different radio access systems, names of base stations may be different, for example, but are not limited to: a base transceiver station (base transceiver station, BTS) in a global system for mobile communications (global system for mobile communications, GSM) or code division multiple access (code division multiple access, CDMA), a NodeB (NodeB, NB) in wideband code division multiple access (wideband code division multiple access, WCDMA), an evolved NodeB (evolved NodeB, eNodeB) in long term evolution (long term evolution, LTE), a next-generation base station (gNodeB, gNB) in a fifth generation mobile communication technology (5th generation mobile communication technology, 5G), namely, new radio access (new radio access, NR), or a base station in another future network system. In some embodiments, the network device includes a core network device, for example, an authentication management function (authentication management function, AMF) or a mobility management entity (mobility management entity, MME).

Terminal: The terminal may be a device having a wireless communication function. In some embodiments, the terminal is UE. In some embodiments, the terminal may also be referred to as a mobile station, an access terminal, a user agent, or the like. For example, the terminal is a terminal in a form of a handheld device, a wearable device, a computing device, a portable device, a vehicle-mounted device, an industrial wireless sensor, a smart instrument, or the like. For example, the terminal is specifically a device such as a cellular phone, a smartphone, smart glasses, a laptop computer, a personal digital assistant, a cordless phone, a pressure sensor, a temperature sensor, or a smart meter.

The terminal in embodiments of this application may be a multi-card terminal or a single-card terminal. The multi-card terminal may also be referred to as a multi-card device or a multi-card terminal device. In some embodiments, the multi-card terminal may be interpreted as a multi-universal subscriber identity module (multi-universal subscriber identity module, Multi-USIM or MUSIM). In some embodiments, the multi-card terminal may also be interpreted as a multi-universal mobile telecommunications system (universal mobile telecommunications system, UMTS) subscriber identity module (multi-UMTS subscriber identity module, Multi-USIM or MUSIM).

The multi-card terminal may include a plurality of subdevices. For example, telephone cards such as a plurality of subscriber identity module (subscriber identity module, SIM) cards or a plurality of universal subscriber identity module (universal subscriber identity module) cards may be installed in the multi-card terminal, and each telephone card is a subdevice. The subdevice included in the multi-card terminal may be a device having a wireless communication function. In some embodiments, the subdevice is UE. The plurality of subdevices included in the multi-card terminal may be separately registered with different networks, for example, different access network devices and/or different core network devices. The plurality of subdevices included in the multi-card terminal may share a radio frequency transmission chain (transmission chain) and/or a radio frequency reception chain (reception chain). The radio frequency transmission chain, for example, includes but is not limited to at least one of the following: an antenna, a power amplifier, a filter, a transmit modulator, an envelope tracker, a low noise amplifier, a filter, an antenna switch, an antenna tuner, and the like. The radio frequency reception chain, for example, includes but is not limited to at least one of the following: an antenna, a filter, a low noise amplifier, a radio frequency interface, an antenna switch, an antenna tuner, an envelope tracker, and the like. Optionally, at any moment, only one of the plurality of subdevices can perform communication by using the shared radio frequency transmission chain and/or radio frequency reception chain, and the plurality of subdevices cannot simultaneously perform communication (send information and/or receive information). For example, the multi-card terminal is a smartphone installed with two telephone cards, and a user can use only one of the telephone cards to make or answer a call, access the Internet, or the like at any moment.

The single-card terminal is a concept relative to the multi-card terminal. The single-card terminal may be understood as a terminal including only one subdevice, namely, the single-card terminal, for example, a smartphone including only one telephone card. In some embodiments, the single-card terminal is UE.

The following embodiments are described by using an example in which a network device is a base station, a single-card terminal is UE, and any subdevice included in a multi-card terminal is UE.

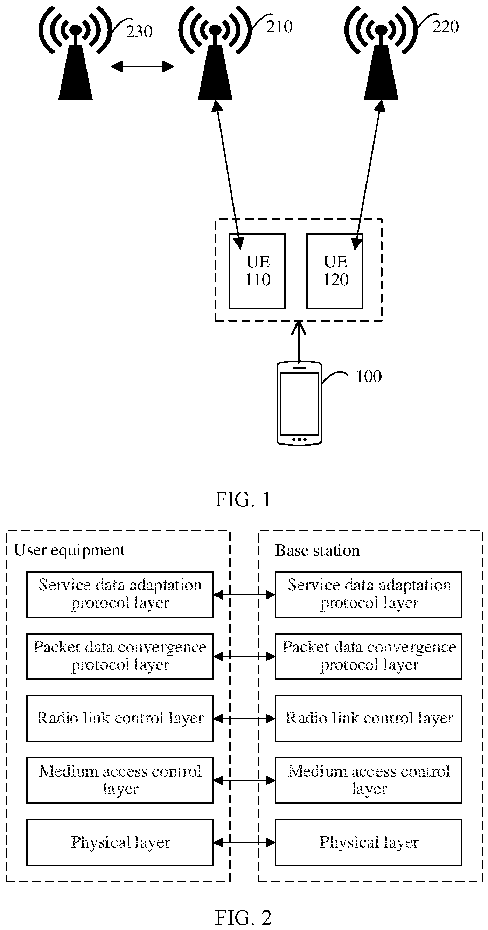

FIG. 1 is a schematic diagram of an architecture of a communication system according to an embodiment of this application. The communication system may be but is not limited to GSM, CDMA, wideband code division multiple access (wideband code division multiple access, WCDMA), time division-code division multiple access (time division-code division multiple access, TD-CDMA), a universal mobile telecommunications system (universal mobile telecommunications system, UMTS), LTE, NR, or another future network system.

As shown in FIG. 1, the communication system may include UE 110, UE 120, a base station 210, a base station 220, and a base station 230. In some embodiments, the UE 110 and the UE 120 are different single-card terminals. In some other embodiments, the UE 110 is a single-card terminal, and the UE 120 is a multi-card terminal or a subdevice included in a multi-card terminal. In some other embodiments, the UE 110 is a multi-card terminal or a subdevice included in a multi-card terminal, and the UE 120 is a single-card terminal. In some other embodiments, the UE 110 and the UE 120 are two subdevices included in a same multi-card terminal. For example, a multi-card terminal 100 shown in FIG. 1 includes the UE 110 and the UE 120.

In some embodiments, the communication system may further include a core network. The core network is a key control node in the communication system, and is mainly responsible for a signaling processing function, for example, but not limited to implementing functions such as access control, mobility management, and session management. In some embodiments, when the UE is in a cell covered by a base station, to be specific, when a current serving cell of the UE corresponds to the base station, the base station may provide a wireless communication service for the UE. Optionally, the UE may transmit uplink data and/or downlink data with the base station. Optionally, the UE may transmit uplink data and/or downlink data through the base station and the core network. Optionally, the UE may transmit data with another device through the base station.

In some embodiments, the UE 110 and the UE 120 may be separately registered with different networks. As shown in FIG. 1, the UE 110 may be connected to the base station 210 through an air interface (for example, Uu), the base station 210 may provide a wireless communication service for the UE 110, the UE 120 may be connected to the base station 220 through an air interface, and the base station 220 may provide a wireless communication service for the UE 120.

In some embodiments, base stations may communicate with each other. As shown in FIG. 1, the base station 210 may communicate with the base station 230 through an Xn interface, and a message transmitted through the Xn interface may be referred to as an Xn interface message.

For example, in NR, the core network may be referred to as a 5G core network (5G Core, 5GC), and the base station may be referred to as a gNB. At least one gNB may constitute one next-generation radio access network (next-generation radio access network, NG-RAN) node. The NG-RAN node may include at least one gNB connected to the 5GC through an NG interface, and at least one gNB in the NG-RAN node may be in connection and communication through an Xn-C interface. The UE may be connected to the gNB through a Uu interface.

It should be noted that forms and quantities of the UE and the base station shown in FIG. 1 are merely used as examples. This is not limited in embodiments of this application.

For ease of understanding, embodiments of this application are mainly described by using LTE and/or NR as applied communication system(s) as example(s).

The following describes an example of a communication protocol stack of NR.

FIG. 2 is a schematic diagram of an architecture of a protocol stack of a user plane of NR. The protocol stack of the user plane may include a physical (physical, PHY) layer, a medium access control (medium access control, MAC) layer, a radio link control (radio link control, RLC) layer, a packet data convergence protocol (packet data convergence protocol, PDCP) layer, and a service data adaptation protocol (service data adaptation protocol, SDAP) layer.

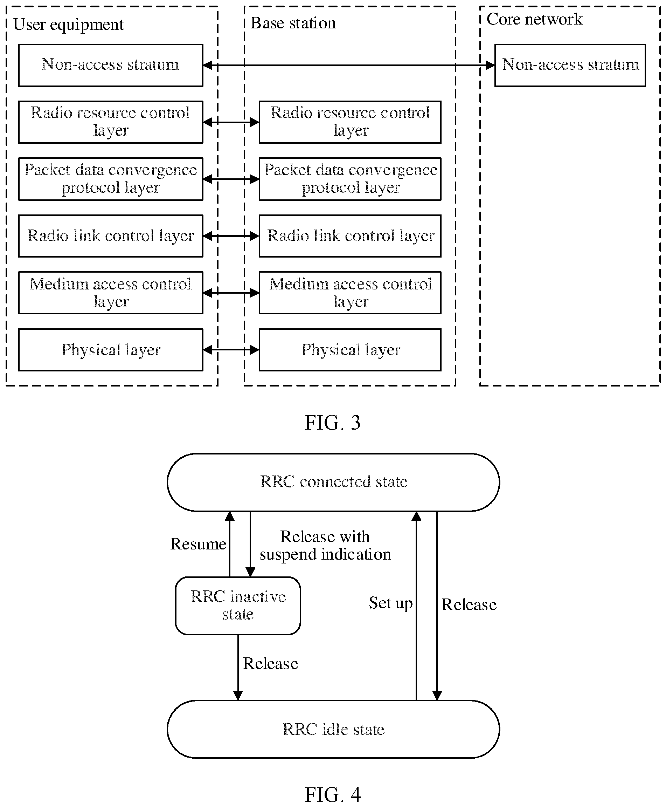

FIG. 3 is a schematic diagram of an architecture of a protocol stack of a control plane of NR. The protocol stack of the control plane may include a PHY layer, a MAC layer, an RLC layer, a PDCP layer, a radio resource control (radio resource control, RRC) layer, and a non-access stratum (non-access stratum, NAS).

In comparison with a protocol stack of a user plane of LTE, the SDAP layer is added to the protocol stack of the user plane of NR. However, architectures of other layers are consistent, and specific descriptions are similar. LTE is mature, and details are not described again.

As shown in FIG. 2 and FIG. 3, lower layers of the PDCP layer include the RLC layer. The PDCP layer may process an RRC message on the control plane, and the PDCP layer may perform IP packet header compression to reduce a quantity of bits transmitted through a radio interface. The PDCP layer may be further responsible for encryption and integrity protection of transmitted data on the control plane. At a receive end, the PDCP layer performs corresponding decryption and decompression operations. One PDCP entity may be configured for each radio bearer. The RLC layer is responsible for segmentation/cascading, retransmission control, repetition detection, and the like. The RLC layer provides a service for the PDCP layer, and may configure one RLC entity for each radio bearer. The MAC layer controls logical channel multiplexing, hybrid automatic repeat request retransmission, uplink and downlink scheduling, and the like. The MAC layer provides a service for the RLC layer in a form of a logical channel. The PHY layer is responsible for managing encoding/decoding, modulation/demodulation, multi-antenna mapping, and other types of physical layer functions. The PHY layer provides a service for the MAC layer in a form of a transport channel.

As shown in FIG. 2 and FIG. 3, the MAC layer may provide a service for a higher layer (for example, the RLC layer) through a logical channel (logical channel, LCH). Based on types of to-be-sent information, logical channels may be classified into a control channel for transmitting control information on the control plane and a traffic channel for transmitting user data on the user plane. The control channel may include, but is not limited to, a common control channel (common control channel, CCCH) and a dedicated control channel (dedicated control channel, DCCH). The traffic channel may include, but is not limited to, a dedicated traffic channel (dedicated traffic channel, DTCH). The CCCH may always exist, and a UE without an RRC connection to a RAN node may also use the CCCH to transmit information. The DCCH may be used for transmitting dedicated control information between the UE and the RAN node. The DTCH may be used for transmitting user data between the UE and the RAN node. Generally, the DCCH and the DTCH do not always exist, but can be used for communication between the UE and a base station only after the base station connected to the UE restores a UE context (UE context). The UE context includes, but is not limited to an identifier of a terminal, a radio bearer (radio bearer, RB)-related configuration, a PDCP layer context or function configuration (for example, a security-related configuration of integrity protection and encryption), a quality of service-related configuration, and the like.

An RB may be a connection format set between the UE and the RAN node, and may include related configurations of a physical channel, a transport channel, and a logical channel. RBs may be classified into a signaling radio bearer (signaling radio bearer, SRB) for transmitting control information on the control plane and a data radio bearer (data radio bearer, DRB) for transmitting user data on the user plane. One DRB may include one entity of the PDCP layer (PDCP entity for short), one entity of the RLC layer (RLC entity for short), and one logical channel.

As shown in FIG. 3, the RRC layer may be used for transmitting an RRC message between the UE and the base station. For example, but not limited to, an RRC resume request (RRCResumeRequest) in NR may be used by the UE to request to resume a suspended RRC connection, so as to transmit data with the base station. The RRC layer belongs to an access stratum (access stratum, AS).

For the RRC layer, currently, there are three RRC states of the UE: an RRC idle (RRC IDLE) state, an RRC inactive (RRC INACTIVE) state, and an RRC connected (RRC CONNECTED) state. Operations performed by the UE in different RRC states are mostly different. For details about the three states and switching processes, refer to an example in FIG. 4.

As shown in FIG. 4, when a UE is in an RRC connected state, an RRC connection is set up between the UE and a base station. In some embodiments, when the UE is in the RRC connected state, a user plane connection and a control plane connection of the UE may be set up between a 5GC and an NG-RAN. The NG-RAN and the UE may retain a UE context at an AS. The NG-RAN may obtain a cell to which the UE belongs, the UE may send or receive unicast data, and a network (for example, the NG-RAN) may control mobility of the UE. For example, the UE may measure a channel between the UE and the base station, and may report a measurement result to the base station, and the base station may determine, based on the measurement result, whether to hand over the cell to which the UE belongs. In other words, when the UE is in the RRC connected state, the UE and the base station can normally transmit data, and the base station can further manage the UE. In some embodiments, if the UE in the RRC connected state needs to send uplink data to the base station, the UE needs to keep synchronization with the base station based on a timing advance (timing advance, TA). If the UE in the RRC connected state does not obtain uplink synchronization, the UE may initiate random access (random access, RA) to the base station. When an uplink advance timer (timing advance timer, TAT) of the UE keeps running, the UE maintains uplink synchronization. When the TAT of the UE expires, the uplink synchronization of the UE fails. If the UE needs to send uplink data to the base station again, the UE needs to initiate RA, to obtain a new TA through the RA. In some embodiments, when the UE is in the RRC connected state, the base station may allocate a configured grant (configured grant, CG) resource to the UE. When the UE has a data transmission requirement, the UE may send uplink data to the base station by using the CG resource. In some embodiments, the base station may configure a CG resource for the UE by using an RRC message, and configured information may include a time-frequency position and a periodicity. In comparison with dynamic scheduling of a transmission resource, this manner of transmitting data by using the CG resource can reduce signaling overheads and a transmission delay.

When there is no uplink resource but there is uplink data to be sent to the base station, the UE in the RRC connected state may trigger reporting of a buffer status report (buffer status report, BSR), to request the base station to schedule an uplink resource. The BSR may indicate a current to-be-transmitted data amount in a data buffer (buffer) of the UE. The data amount may be different at different moments. For example, when the UE is a smartphone, a user may send a message to another user by using a social application installed on the UE. However, types and quantities of messages sent by the user at different moments may be different. Sometimes, the sent message may be only one text message, and sometimes, the sent message may include a plurality of videos. Therefore, sizes of BSRs sent by the UE to the base station at different moments may also be different. A resource (BSR resource for short) used by the UE to send the BSR to the base station may be dynamically scheduled by the base station to the UE.

When the UE is in the RRC idle state, no RRC connection is set up between the UE and the base station. In some embodiments, when the UE is in an RRC idle state, the UE may select a public land mobile communication network (public land mobile network, PLMN), receive system information broadcast by the base station, perform cell re-selection (cell re-selection), receive called paging (Paging) initiated by the 5GC for downlink transmission, perform discontinuous reception (discontinuous reception, DRX) configured by a NAS for core network paging, and the like.

An RRC inactive state is a newly added RRC state in NR. In some embodiments, for a UE that does not frequently transmit data, the base station usually keeps the UE in the RRC inactive state. In some embodiments, when the UE is in the RRC inactive state, the UE may select a PLMN, receive system information broadcast by the base station, perform cell re-selection, receive called paging (Paging) initiated by the NG-RAN, maintains a RAN-based notification area (RAN-based Notification Area, RNA) managed by the NG-RAN, for example, the UE triggers an RNA update (RNA update, RNAU), to notify the base station of an RNA in which the UE is currently located, and performs DRX configured by the NG-RAN for RAN paging, where a user plane connection and a control plane connection of the UE may be set up between the 5GC and the NG-RAN. The NG-RAN and the UE may retain the UE context at the AS, and the NG-RAN may obtain the RNA in which the UE is located. In some embodiments, after the UE establishes an RRC connection to the base station, the UE enters the RRC connected state. If the UE in the RRC connected state does not need to transmit data with the base station in a preset time period, the base station may indicate the UE to enter the RRC inactive state. For example, the base station may send, to the UE, an RRC release with suspend indication (RRCRelease with suspend indication) message. After receiving the RRCRelease with suspend indication, the UE retains a context of the UE, and enters the RRC inactive state.

The foregoing three states at the RRC layer may be switched. As shown in FIG. 4, in some embodiments, when the UE is in the RRC idle state or the RRC inactive state (which may be collectively referred to as a non-RRC connected state), if data transmission needs to be performed, an RRC connection setup process or an RRC connection resume process may be initiated. For example, the UE in the RRC idle state may set up an RRC connection to the base station by performing RA. Specifically, the UE sends an RRC setup request (RRCSetupRequest) message to the base station, and then receives an RRC setup (RRCSetup) message sent by the base station. After receiving the RRCSetup message, the UE may set up the RRC connection to the base station, and enter the RRC connected state. For example, the UE in the RRC inactive state may send an RRCResumeRequest message to the base station, and then receive an RRC resume (RRCResume) message sent by the base station. After receiving the RRCResume message, the UE may enter the RRC connected state. In some other embodiments, when the UE is in the non-RRC connected state, the UE may also perform an RRC connection setup process or an RRC connection resume process in response to a paging message of the base station. For example, when a core network has data to be transmitted to the UE, the core network may indicate the base station to send a paging message to the UE.

In some embodiments, the UE may enter the RRC inactive state or the RRC idle state from the RRC connected state as indicated by the base station. In some embodiments, when the UE does not need to perform data transmission subsequently, the base station may release the UE, so that the UE enters the RRC inactive state or the RRC idle state. Specific examples are as follows.

Example 1: The UE enters the RRC inactive state from the RRC connected state as indicated by the base station. Specifically, the base station may send, to the UE, a release with suspend indication message, for example, an RRCRelease with suspend indication message, so that the UE enters the RRC inactive state. In this case, the RRC connection between the UE and the base station is suspended, but at least one RAN node retains the UE context of the UE.

Example 2: The UE enters the RRC idle state from the RRC connected state as indicated by the base station. Specifically, the base station may send a release message, for example, an RRC release (RRCRelease) message, to the UE, so that the UE enters the RRC idle state. In this case, the RRC connection between the UE and the base station is stopped, and the RAN node deletes the UE context of the UE.

In some embodiments, the UE may alternatively enter the RRC idle state from the RRC inactive state as indicated by the base station. For example, after the UE in the RRC inactive state sends an RRC connection resume request, the base station may release the UE, so that the UE enters the RRC idle state. It may be understood that, in comparison with entering the RRC connected state from the RRC idle state, a speed at which the UE enters the RRC connected state from the RRC inactive state is faster.

In some embodiments, when the UE is in the RRC idle state or the RRC inactive state, if the UE needs to transmit data, the UE may perform an RRC connection setup process or an RRC connection resume process, to request to enter the RRC connected state to transmit data. If the UE in the RRC idle state or the RRC inactive state has no resource for sending an RRCSetupRequest message or an RRCResumeRequest message, the UE needs to initiate a random access (random access, RA) process. The following describes RA by using an example.

In some embodiments, a UE may obtain an RA configuration of a current cell from system information broadcast by a base station. For example, the configuration includes an available random access preamble (random access preamble) and an RA resource for sending the random access preamble. For example, the RA resource for sending the random access preamble is a time-frequency resource for sending the random access preamble by the UE, and may also be referred to as a random access occasion (random access occasion, RO). In some embodiments, the RA may include 4-step random access (4-step RA for short) and 2-step random access (2-step RA for short). The base station may broadcast, in the system information, an RA configuration corresponding to the 4-step RA and an RA configuration corresponding to the 2-step RA; may broadcast, in the system information, only an RA configuration corresponding to the 4-step RA; or may broadcast, in the system information, only an RA configuration corresponding to the 2-step RA.

In some embodiments, the base station may broadcast, in the system information, the RA configuration corresponding to the 4-step RA and the RA configuration corresponding to the 2-step RA. When no contention-free random access (contention-free random access, CFRA) resource is configured for the UE, the UE may determine, based on a relative value between a currently measured reference signal received power (reference signal received power, RSRP) and a preset RSRP threshold, to initiate the 4-step RA or the 2-step RA. For example, when the currently measured RSRP is greater than or equal to the preset RSRP threshold, the UE may initiate the 2-step RA. When the currently measured RSRP is less than the preset RSRP threshold, the UE may initiate the 4-step RA.

A message sent by the UE to the base station in the third step of the 4-step RA may be referred to as a message 3, which is referred to as a msg3 for short. A message sent by the UE to the base station in the first step of the 2-step RA may be referred to as a message A, which is referred to as a msgA for short. In some embodiments, the msg3 or the msgAmay include an RRC message. The RRC message may be different when the UE is in different RRC states and in different service scenarios. For example, when the UE in an RRC inactive state has data to be sent to the base station, the msg3 sent by the UE to the base station may include an RRCResumeRequest message, to request to resume a suspended RRC connection and enter an RRC connected state to transmit the data with the base station.

It may be understood that, generally, the UE in a non-RRC connected state has uplink data to be sent to the base station, or receives a paging (Paging) message sent by the base station. The paging message is used by the base station to indicate that there is downlink data to be sent to the UE. The UE needs to re-set up or resume the RRC connection and enter the RRC connected state, and then transmits the data with the base station in the RRC connected state. However, the foregoing method is applicable to a case in which a large amount of data is transmitted between the UE and the base station. If a transmitted data packet is small, this type of data packet may be referred to as small data (small data), and a size of signaling required in a state switching process of the UE is even greater than the size of the small data. As result, unnecessary power consumption and signaling overheads of the UE are caused. Therefore, it is necessary to transmit small data to the base station when the UE is in the non-RRC connected state. For example, when the UE in the RRC inactive state needs to transmit uplink small data, the UE may transmit the uplink small data to the base station.

In embodiments of this application, the small data may include but is not limited to a data packet whose data amount is less than a preset threshold (for example, a size of a transport block indicated by the base station), a data packet whose data label is small data, a data packet whose data type is small data, and the like. A data packet that is not small data may be referred to as large data, and may include but is not limited to a data packet whose data amount is greater than or equal to the preset threshold, a data packet whose data label is large data, a data packet whose data type is large data, and the like. The data label and/or the data type may be jointly negotiated by the UE and a network device. For example, the data label may include large data and small data. For example, data whose data type is heartbeat packet is small data, and data whose data type is file, video, or audio is large data. For example, the small data is an instant messaging message of an application (application, APP), a heartbeat packet of an APP, or a push message of an APP of the UE. For another example, the small data is periodic data (for example, a heartbeat packet) of a wearable device such as a smartwatch. For another example, the small data is service data of an internet of things (internet of things, IoT) device. For another example, the small data is periodic reading of an industrial wireless sensor network. For another example, the small data is periodic reading of a smart instrument such as a smart meter.

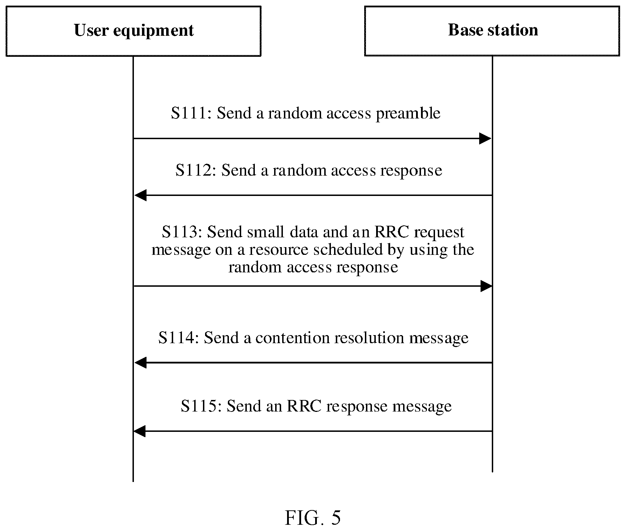

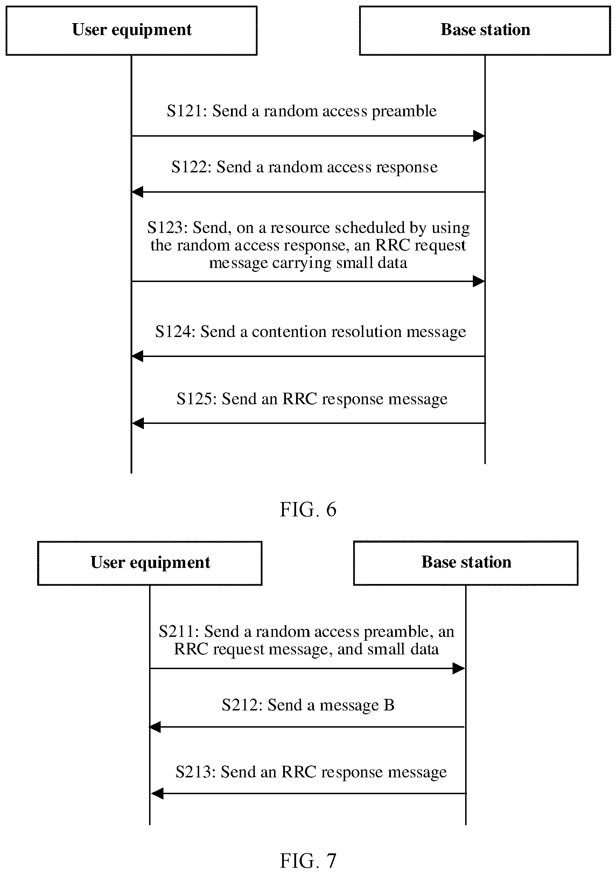

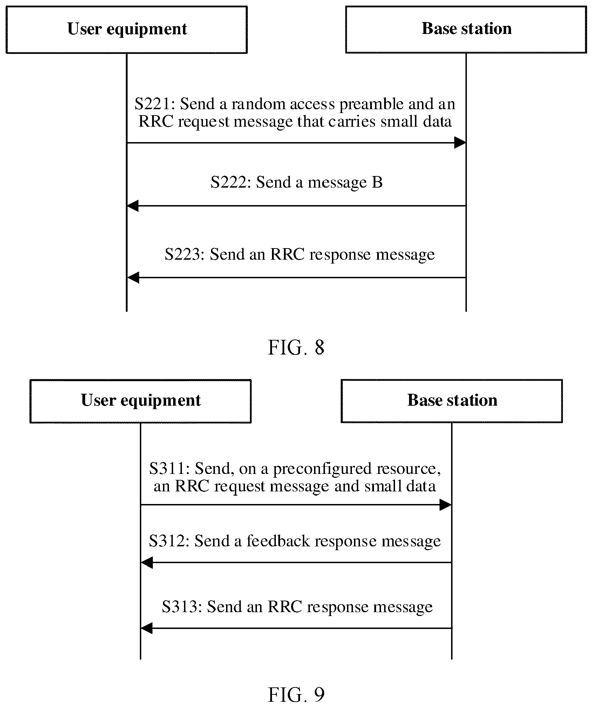

In some embodiments, the transmitting small data to the base station when the UE is in the non-RRC connected state may include: The UE transmits the small data in an RA process, and does not need to transmit the small data after entering the RRC connected state. The foregoing transmission process may be referred to as RA-based small data transmission (small data transmission, SDT), which is referred to as RA-SDT for short. In some embodiments, RA may include 4-step RA and 2-step RA, and SDT may also include SDT based on the 4-step RA (4-step SDT for short) and SDT based on the 2-step RA (2-step SDT for short). For examples of a 4-step SDT process, refer to FIG. 5 and FIG. 6. For examples of a 2-step SDT process, refer to FIG. 7 and FIG. 8. An implementation of the RA-SDT is similar to that of the RA. For example, the UE may obtain an RA-SDT configuration from system information broadcast by the base station, and the UE may determine, based on a relative value between a currently measured RSRP and a preset RSRP threshold, to initiate the 4-step SDT or the 2-step SDT.

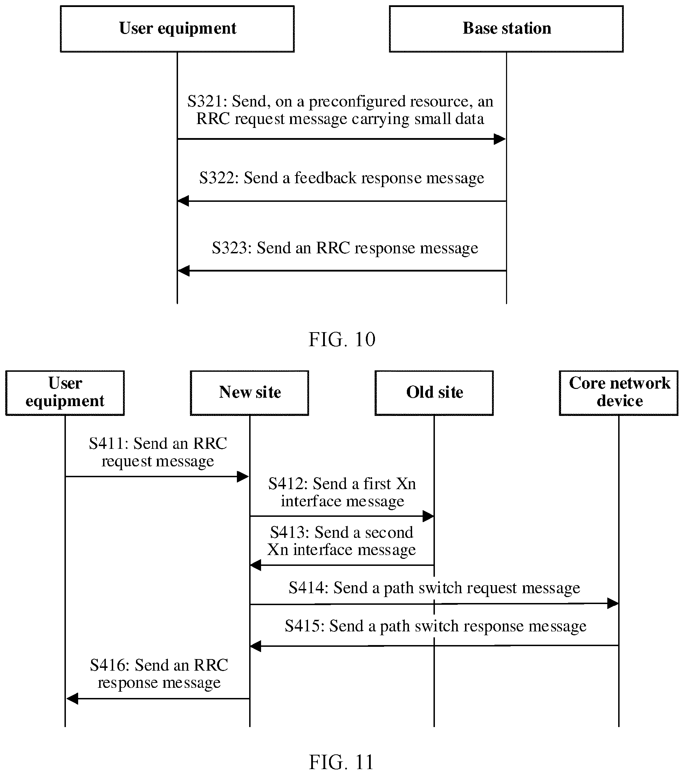

In some other embodiments, the transmitting small data to the base station when the UE is in the non-RRC connected state may further include: The UE transmits the small data by using a pre-allocated CG resource or a preconfigured uplink resource (preconfigured uplink resource, PUR), and does not need to transmit the small data after entering the RRC connected state. The foregoing transmission process may be referred to as CG-based SDT, which is referred to as CG-SDT for short. For specific process examples, refer to FIG. 9 and FIG. 10.

In some embodiments, the SDT has a plurality of different application scenarios, and SDT in different implementations, for example, RA-SDT or CG-SDT, may be used based on the application scenarios. Specific examples are as follows.

Example 1: In CG-SDT, a resource (for example, a CG resource or a PUR) indicated by a CG-SDT configuration is delivered by a base station to a UE by using dedicated control signaling. Therefore, the CG-SDT configuration is applicable to a UE in a cell covered by the base station. A CG-SDT configuration provided in one cell cannot be reused by a UE in another cell. If the UE moves to coverage of another network device, the resource indicated by the CG-SDT configuration cannot be used. Based on such a feature, for example, the CG-SDT may be applied to the following scenario: For an IoT application, mobility of a UE is limited, all connections are usually set up in a same cell for sending data, and the cell is rarely changed, so that the UE in the IoT field may preferably use the CG-SDT.

Example 2: An RA configuration related to an RA-SDT configuration may be provided by system information sent by a base station. Each time a UE reselects a new cell, the UE may read and apply a configuration broadcast by the system information. Based on such a feature, for example, the RA-SDT may be applied to the following scenario: For an application such as an instant messaging message of a smartphone, mobility of a UE is strong, and the UE may move from coverage of one base station to coverage of another base station. If the UE moves from coverage of a base station A to coverage of a base station B, and the UE, in the coverage of the base station B, performs SDT by using a resource indicated by a CG-SDT configuration sent by the base station A before the movement, the UE cannot transmit data. Because a resource for sending a random access preamble in RA-SDT is broadcast by the base station in real time, a UE with strong mobility preferentially uses the RA-SDT.

Certainly, whether the UE uses the CG-SDT or the RA-SDT may also be not limited by a scenario, and a to-be-used manner of the SDT may be determined based on an implementation of the UE.

For example, because a resource for performing CG-SDT is specially configured by a base station for UE, a success rate of performing CG-SDT by the UE is high. A random access resource of RA-SDT is broadcast by a network device, and all LTEs that can receive a broadcast message may initiate the RA-SDT on the random access resource. The plurality of LTEs may contend for a resource. This may cause a contention failure. Therefore, a success rate of the RA-SDT is lower than a success rate of the CG-SDT, and the CG-SDT may be more effective than the RA-SDT. Generally, the UE preferentially selects the CG-SDT. The UE also needs to satisfy a specific condition to select the CG-SDT. If the condition is not satisfied, the UE may select the RA-SDT. For example, whether a resource indicated by a CG-SDT configuration exists in coverage of a normal uplink (normal uplink, NUL) carrier or a supplementary uplink (supplementary uplink, SUL) carrier on which the UE is currently located is determined, and if the resource indicated by the CG-SDT configuration exists and a valid resource exists in the resource indicated by the CG-SDT configuration, the UE may select the CG-SDT; otherwise, the UE selects the RA-SDT.

In some embodiments, an RB configured by the base station for the UE may include an RB for carrying small data (an SDT RB for short) and an RB for carrying large data (a non-SDT RB (non-SDT RB) for short). The RB may include a DRB for carrying data and an SRB for carrying control information. The UE can initiate SDT only when the small data carried on the SDT RB arrives. If the large data carried on the non-SDT RB arrives, the UE cannot initiate SDT.

The following describes an example of an SDT process.

FIG. 5 is an example of a schematic flowchart of a 4-step SDT process on a user plane. The process shown in FIG. 5 may include but is not limited to the following steps.

S111: A UE sends a random access preamble to a base station.

In some embodiments, the base station may send a broadcast message to the UE, where the broadcast message includes first resource configuration information, and the first resource configuration information indicates a random access resource for sending the random access preamble. Optionally, the first resource configuration information may specifically indicate a first random access resource used for initiating normal random access. Optionally, the first resource configuration information may specifically indicate a second random access resource used for sending a random access preamble in an RA-SDT process. The random access preamble may be generated by the UE according to a specific rule, but the base station can identify the random access preamble generated by the UE.

In some embodiments, a random access preamble sent by the UE to perform RA-SDT may be different from a random access preamble sent by the UE to initiate normal RA instead of performing RA-SDT. In other words, the base station may distinguish intentions of the UE by using different random access preambles. For example, the intention of the UE is to perform RA-SDT or initiate RA.

In some other embodiments, a random access preamble sent by the UE to perform RA-SDT may alternatively be the same as a random access preamble sent by the UE to initiate normal RA instead of performing RA-SDT.

In some embodiments, if the first resource configuration information specifically indicates the first random access resource used for initiating normal random access and the second random access resource used for sending the random access preamble in the RA-SDT process, the UE may send the random access preamble on different random access resources based on different intentions. In this way, the base station may distinguish intentions of the UE by using different resources for receiving the random access preamble. For example, when the UE intends to initiate RA, the UE sends the random access preamble on the first random access resource. When receiving the random access preamble by using the first random access resource, the base station may determine that the intention of the UE is to initiate RA. When the UE intends to perform RA-SDT, the UE sends the random access preamble on the second random access resource. When receiving the resource random access preamble by using the second random access resource, the base station may determine that the intention of the UE is to perform RA-SDT.

In some other embodiments, a random access resource used by the UE to send a random access preamble to perform RA-SDT may alternatively be the same as a random access resource used by the UE to initiate normal RA instead of performing RA-SDT.

S112: The base station sends a random access response (random access response, RAR) to the UE in response to the random access preamble.

Specifically, after sending the random access preamble to the base station, the UE may monitor a physical downlink control channel (physical downlink control channel, PDCCH) in an RAR time window, to receive the RAR sent by the base station. If the UE does not receive, in the RAR time window, the RAR sent by the base station, the UE may determine that the RA fails. The RAR is used for scheduling an uplink resource (uplink grant, UL grant) for the UE, so that the UE may send a msg3 (including an RRC request message in S113) on a resource scheduled by using the RAR.

In some embodiments, the RAR may further include at least one of a temporary cell radio network temporary identifier (temporary cell radio network temporary identifier, TC-RNTI) and a timing advance (timing advance, TA). The TA is used by the UE to learn of uplink synchronization.

S113: The UE sends uplink small data and the RRC request message to the base station on the resource scheduled by using the RAR.

In some embodiments, the RRC request message may carry intention information, and the intention information indicates an intention of sending the RRC request message by the UE. For example, the intention of the UE is to perform RA-SDT or initiate RA. For example, if a random access preamble sent by the UE to initiate RA-SDT is the same as a random access preamble used by the UE to initiate normal RA instead of performing RA-SDT, or a random access resource used by the UE to send a random access preamble to initiate RA-SDT is the same as a random access resource used by the UE to send a random access preamble to initiate normal RA instead of performing RA-SDT, the RRC request message sent by the UE to perform RA-SDT may carry intention information, where the intention information indicates an intention of initiating the RA-SDT by the UE, instead of initiating normal RA.

In some other embodiments, the UE may send a BSR when sending the msg3 to the base station, and the base station may obtain an intention of the UE by using the BSR sent by the UE. For example, the intention of the UE is to perform RA-SDT or initiate RA. For example, a random access preamble sent by the UE to perform RA-SDT is the same as a random access preamble sent by the UE to initiate normal RA instead of performing RA-SDT, and a random access resource used by the UE to send a random access preamble to perform RA-SDT may also be the same as a random access resource used by the UE to initiate normal RA instead of performing RA-SDT. If the UE needs to perform RA-SDT, the UE may send a BSR when sending the msg3 to the base station, where the BSR indicates a data amount of small data, the base station may learn, by using the received BSR, that an intention of the UE is to initiate RA-SDT, instead of initiating normal RA.

In some embodiments, RRC request messages in msgs3 may be different when the UE is in different RRC states and different service scenarios. For example, the RRC request message sent by the UE in an RRC idle state (optionally, the UE may store a UE context such as configuration information for obtaining a key for encrypting the uplink small data, or the UE may not store its context) may include an RRC connection request (RRCConnectionRequest) message, an RRC connection resume request (RRCConnectionResumeRequest) message, an RRC early data transmission request (RRCEarlyDataRequest) message, an RRCResumeRequest message, an RRCResumeRequest1 message, an RRCSetupRequest message or another RRC message that has a same function but is not standardized by the 3rd generation partnership project (3rd generation partnership project, 3GPP). The RRC request message sent by the UE in an RRC inactive state may be an RRCConnectionRequest message, an RRCConnectionResumeRequest message, an RRCEarlyDataRequest message, an RRCResumeRequest message, an RRCResumeRequest1 message, an RRCSetupRequest message, or another RRC message that has a same function but is not standardized by the 3GPP.

In some embodiments, the UE may send the uplink small data and the RRC request message to the base station, to initiate an RRC connection resume process for the 4-step SDT. In some embodiments, the RRC request message for initiating the RRC connection resume procedure for the 4-step SDT includes an information element (information element, IE) of a resume cause (resumeCause), and the resumeCause IE may be set to mo-data.

In some embodiments, the UE first initializes the RRC connection resume process for the SDT, and then sends the RRC request message to the base station based on the 4-step SDT. In some embodiments, the msg3 may include an identifier of the UE, for example, a unique identifier of the UE in a core network. In some embodiments, the msg3 may include related information of a base station previously connected to the UE, for example, an inactive radio network temporary identifier (inactive radio network temporary identifier, I-RNTI). In some embodiments, the msg3 may include information used for encryption and integrity protection.

In some embodiments, the uplink small data may be transmitted on a DTCH, and the RRC message may be transmitted on a CCCH. A MAC layer may encapsulate the small data and the RRC request message, and send the small data and the RRC request message that are encapsulated to the base station through a PHY layer.

S 114: After receiving the RRC request message, the base station sends a contention resolution (contention resolution) message to the UE.

In some embodiments, after receiving the uplink small data and the RRC request message, the base station may restore the UE context, and send the received uplink small data to the core network.

In some embodiments, the contention resolution message is actually a contention resolution identity medium access control (contention resolution Identity MAC control element, contention resolution Identity MAC CE), and the contention resolution Identity MAC CE may indicate that contention resolution of the UE is successful. In some embodiments, the UE may determine whether the contention resolution Identity MAC CE is consistent with the msg3 sent in S113, and if the contention resolution Identity MAC CE is consistent with the msg3 sent in S113, the UE determines that contention resolution corresponding to the current RA-SDT process succeeds, or determines that the current RA-SDT process succeeds.

S115: The base station sends an RRC response message to the UE.

In some embodiments, if the core network has downlink small data to be sent to the UE, the core network may send the downlink small data to the base station. Then, the base station may send the downlink small data to the UE together with the RRC response message. The downlink small data may be transmitted on the DTCH, and multiplexed with the RRC response message transmitted on the DCCH at the MAC layer.

In some embodiments, the UE may determine, based on the RRC response message, whether the uplink small data is successfully transmitted. Specific examples are as follows.

Example 1: The RRC response message sent by the base station is an RRC connection release (RRCConnectionRelease) message, an RRC connection resume (RRCConnectionResume) message, an RRC connection setup (RRCConnectionSetup) message, an RRCRelease message, an RRCResume message, an RRCSetup message, or another RRC message that has a same function but is not standardized by the 3GPP. When the UE receives the RRC response message, it may be determined that the SDT succeeds.

Example 2: The RRC response message sent by the base station is an RRC connection reject (RRCConnectionReject) message, an RRC reject (RRCReject) message, or another RRC message that has a same function but is not standardized by the 3GPP. When the UE receives the RRC response message, it may be determined that the SDT fails.

In some embodiments, the UE may keep in a current RRC state or enter another RRC state based on the RRC response message. Specific examples are as follows.

Example 1: If the core network does not need to further transmit data, the RRC response message sent by the base station is an RRC early data transmission complete (RRCEarlyDataComplete) message, an RRCConnectionRelease message, an RRC release with suspend configuration (RRCRelease with suspend config) message, an RRCRelease message, or another RRC message that has a same function but is not standardized by the 3GPP. When the UE receives the RRC response message, it may be considered that the SDT process is successful. In addition, the UE may keep in a current non-RRC connected state in response to the RRC response message. Optionally, the RRC response message (for example, the RRCRelease message) may include a related configuration of SDT initiated by the UE next time, for example, a next hop chaining count (next hop chaining count, NCC) and an I-RNTI for encrypting small data by the UE.

Example 2: If the core network need to further transmit data, the core network may trigger a connection setup indication process, and the RRC response message sent by the base station is an RRCConnectionSetup message, an RRCConnectionResume message, an RRCSetup message, an RRCResume message, or another RRC message that has a same function but is not standardized by the 3GPP. When the UE receives the RRC response message, it may be considered that the SDT process is successful. In addition, the UE may enter an RRC connected state in response to the RRC response message.

In some embodiments, if the UE does not receive the RRC response message in S115, it is considered that the small data transmission in S113 fails. If the UE receives the RRC response message in S115, it is considered that the small data transmission in S113 is successful. In other words, the UE may determine, depending on whether the RRC response message is received, whether the small data transmission in S113 is successful.

It should be noted that whether the core network needs to further transmit data does not include that the base station needs to send the downlink small data in S115.

FIG. 6 is an example of a schematic flowchart of a 4-step SDT process on a control plane. The process shown in FIG. 6 may include but is not limited to the following steps.

S121: A UE sends a random access preamble to a base station.

S122: The base station sends an RAR to the UE in response to the random access preamble.

Specifically, S121 and S122 are similar to S111 and S112 in FIG. 5, and details are not described again.

S123: The UE sends an RRC request message carrying uplink small data to the base station on a resource scheduled by using the RAR.

Specifically, S123 is similar to S113 in FIG. 5, and a difference lies in that the uplink small data is not sent after being encapsulated with a msg3 at a MAC layer, but is sent by being carried in the msg3. In some embodiments, the uplink small data may be carried in the msg3 and transmitted on a CCCH. For example, the uplink small data may be carried in a NAS-related IE (for example, a dedicated information NAS (dedicatedInfoNAS) IE) included in an RRCEarlyDataRequest message, and transmitted on the CCCH.

S124: After receiving the RRC request message, the base station sends a contention resolution message to the UE.

Specifically, S124 is similar to S114 in FIG. 5, and a difference lies in that the RRC request message received by the base station includes the uplink small data. In some embodiments, the base station may send the uplink small data to a core network by using the msg3 carrying the uplink small data. For example, the base station may send the uplink small data to the core network by forwarding the NAS-related IE included in the msg3.

S125: The base station sends an RRC response message to the UE.

Specifically, S 125 is similar to S115 in FIG. 5, and details are not described again.

FIG. 5 and FIG. 6 are described by using an example in which S111 and/or S121 are/is performed when the UE has uplink small data to be sent to the base station, that is, the UE actively initiates a small data transmission process. However, in a specific implementation, there is further a case in which the UE passively initiates a small data transmission process, for example, mobile terminated early data transmission (mobile terminated, MT) EDT (MT-EDT for short) in LTE, as indicated by the base station. The transmission process in this case is similar to the transmission processes shown in FIG. 5 and FIG. 6, and a difference is specifically described as follows:

Before S111, when the core network has downlink small data to be sent to the UE, the core network may send a paging message to the base station. In some embodiments, the paging message may carry data amount information of the downlink small data. In some embodiments, the base station may send a paging message to the UE, and the UE determines, based on a relative value between a currently measured RSRP and a preset RSRP threshold, to initiate 4-step SDT. For example, the base station may trigger MT-EDT based on the paging message, and send, to the UE, a paging message carrying an MT-EDT indication, so that the UE triggers MO-EDT for the MT-EDT. Different from the foregoing process in which the UE actively initiates the small data transmission, in S113, the UE may send only the RRC request message to the base station, and does not send the uplink small data, and optionally, may further carry cause information for triggering the MT-EDT. Correspondingly, the base station may receive the downlink small data sent by the core network, and in S115, the base station may send the RRC response message and the downlink small data to the UE.

Similarly, before S121, when the core network has downlink small data to be sent to the UE, the core network may send a paging message to the base station. In some embodiments, the paging message may carry data amount information of the downlink small data. In some embodiments, the base station may send a paging message to the UE, and the UE determines, based on a relative value between a currently measured RSRP and a preset RSRP threshold, to initiate 4-step SDT. Different from the foregoing process in which the UE actively initiates small data transmission, the RRC request message sent by the UE to the base station in S123 may not carry the uplink small data, and optionally, may further carry cause information for triggering the MT-EDT. Correspondingly, the base station may receive the downlink small data sent by the core network. The RRC response message sent by the base station to the UE in S125 may carry the downlink small data.

FIG. 7 is an example of a schematic flowchart of a 2-step SDT process on a user plane. The process shown in FIG. 7 may include but is not limited to the following steps.

S211: A UE sends a random access preamble, an RRC request message, and uplink small data to a base station.

In some embodiments, a transmission resource for performing S211 by the UE may be obtained by using information broadcast by the base station. For example, the UE may send the random access preamble by using an RA resource broadcast by the base station, and the UE may send the RRC request message by using a PUSCH resource broadcast by the base station.

In some embodiments, the base station may distinguish intentions of the UE by using different random access preambles. In some other embodiments, the base station may distinguish intentions of the UE by using different resources for receiving the random access preamble. In some other embodiments, the base station may obtain an intention of the UE by using a BSR sent by the UE. In some other embodiments, the RRC request message may carry intention information, where the intention information indicates an intention of the UE to send the RRC request message, for example, the UE is intended to perform RA-SDT or initiate RA. For details, refer to the examples of S111 and S113 in FIG. 5. Details are not described again.

In some embodiments, the RRC request message in the msgA may be different when the UE is in different RRC states and in different service scenarios. For details, refer to the example of the RRC request message in the msg3 in FIG. 5. Details are not described again.

In some embodiments, the RRC request message and the uplink small data may be carried in load of a physical uplink shared channel (physical uplink shared channel, PUSCH). The uplink small data may be transmitted on a DTCH, and the RRC message may be transmitted on a CCCH. A MAC layer may encapsulate the small data and the RRC request message, and send the small data and the RRC request message that are encapsulated to the base station through a PHY layer.

In some embodiments, the UE may send the uplink small data and the RRC request message to the base station, to initiate an RRC connection resume process for the 2-step SDT. In some embodiments, in the RRC request message for initiating the RRC connection resume process for the 2-step SDT, a resumeCause IE may be set to mo-data.

In some embodiments, the UE first initializes the RRC connection resume process for the SDT, and then sends the RRC request message to the base station based on the 2-step SDT.

For descriptions of the RRC request message and the uplink small data, refer to the descriptions of the RRC request message and the uplink small data in S113 in FIG. 5, and details are not described again.

S212: After receiving the RRC request message, the base station sends a message B to the UE.

In some embodiments, after receiving the uplink small data and the RRC request message, the base station may restore a UE context, and send the received uplink small data to a core network.

In some embodiments, a message sent by the base station to the UE in the second step of 2-step RA may be referred to as the message B (message B), msgB for short. The msgB may be understood as a response corresponding to the msgA in the 2-step SDT process. In some embodiments, the msgB may include a response for contention resolution, a fallback indication (fallback indication), or a backoff indication (backoff indication). For example, the msgB includes a backoff indicator (backoff Indicator), a success RAR (successRAR), or a fallback RAR (fallbackRAR).

In some embodiments, the msgB includes a successRAR, and the successRAR includes a contention resolution field, for example, content included in a contention resolution MAC CE. After receiving the successRAR, the UE determines that contention resolution corresponding to the current RA-SDT process succeeds, or determines that the current RA-SDT process succeeds. Optionally, the contention resolution field in the successRAR may indicate that the contention resolution of the UE succeeds. Optionally, the UE may determine whether the contention resolution field in the successRAR is consistent with the msgA sent in S211. If the contention resolution field in the successRAR is consistent with the msgA sent in S211, the UE determines that the contention resolution corresponding to the current RA-SDT process succeeds, or determines that the current RA-SDT process succeeds. In some other embodiments, the msgB includes the fallbackRAR. After receiving the fallbackRAR, the UE sends the msg3 and the uplink small data to the base station again.

S213: The base station sends an RRC response message to the UE.

In some embodiments, if the core network has downlink small data to be sent to the UE, the core network may send the downlink small data to the base station. Then, the base station may send the downlink small data to the UE together with the RRC response message.

For descriptions of the RRC response message, refer to the descriptions of the RRC response message in S115 in FIG. 5. Details are not described again.

FIG. 8 is an example of a schematic flowchart of a 2-step SDT process on a control plane. The process shown in FIG. 8 may include but is not limited to the following steps.

S221: A UE sends a random access preamble and an RRC request message that carries uplink small data to a base station.

Specifically, S221 is similar to S211 in FIG. 7, and a difference lies in that the uplink small data is not sent together with the RRC request message in the msgA, but is sent by being carried in the RRC request message in the msgA. In some embodiments, the RRC request message carrying the uplink small data may be carried in load of a physical uplink shared channel (physical uplink share channel, PUSCH), and may be transmitted on a CCCH.

S222: After receiving the RRC request message, the base station sends a msgB to the UE.

Specifically, S222 is similar to S212 in FIG. 7, and a difference lies in that the RRC request message received by the base station includes the uplink small data. In some embodiments, the base station may send the uplink small data to the core network by using the RRC request message carrying the uplink small data. For example, the base station may send the uplink small data to the core network by forwarding an RRCResumeRequest message carrying the uplink small data.

S223: The base station sends an RRC response message to the UE.

Specifically, S223 is similar to S213 in FIG. 7, and details are not described again.

FIG. 7 and FIG. 8 are described by using an example in which S211 and/or S221 are/is performed when the UE has uplink small data to be sent to the base station, that is, the UE actively initiates a small data transmission process. However, in a specific implementation, the UE may alternatively passively initiate a small data transmission process as indicated by the base station. The transmission process in this case is similar to the transmission processes shown in FIG. 7 and FIG. 8, and a difference is specifically described as follows:
Before S211, when the core network has downlink small data to be sent to the UE, the core network may send a paging message to the base station. In some embodiments, the paging message may carry data amount information of the downlink small data. In some embodiments, the base station may send a paging message to the UE, and the UE determines, based on a relative value between a currently measured RSRP and a preset RSRP threshold, to initiate 2-step SDT. For example, the base station may trigger MT-EDT based on the paging message, and send, to the UE, a paging message carrying an MT-EDT indication, so that the UE triggers MO-EDT for the MT-EDT. Different from the foregoing process in which the UE actively initiates the small data transmission, in S211, the UE may send only the random access preamble and the RRC request message to the base station, and does not send the uplink small data, and optionally, may further carry cause information for triggering the MT-EDT. Correspondingly, the base station may receive the downlink small data sent by the core network, and in S213, the base station may send the RRC response message and the downlink small data to the UE.

Similarly, before S221, when the core network has downlink small data to be sent to the UE, the core network may send a paging message to the base station. In some embodiments, the paging message may carry data amount information of the downlink small data. In some embodiments, the base station may send a paging message to the UE, and the UE determines, based on a relative value between a currently measured RSRP and a preset RSRP threshold, to initiate 2-step SDT. Different from the foregoing process in which the UE actively initiates small data transmission, the RRC message sent by the UE to the base station in S221 may not carry the uplink small data, and optionally, may further carry cause information for triggering the MT-EDT. Correspondingly, the base station may receive the downlink small data sent by the core network. The RRC response message sent by the base station to the UE in S223 may carry the downlink small data.

This is not limited to the foregoing examples. In some other embodiments, the base station may alternatively send the msgB and the RRC response message together to the UE.

In some embodiments, after initiating the RA-SDT, the UE cannot complete the small data transmission by sending one msg3 or msgA, and the UE may complete subsequent small data transmission by using subsequent transmission (subsequent transmission). The subsequent transmission may be performed after the UE receives the contention resolution and before the base station sends the RRC response message to the UE, for example, between S114 and S115 in FIG. 5 and between S212 and S213 in FIG. 7. Specific examples are as follows.

Example 1: RA-SDT currently initiated by the UE is used for transmitting one piece of small data (for example, an instant messaging message). When the UE initiates 4-step SDT, a UL grant indicated by the base station in an RAR is less than a sum of resources for transmitting small data and an RRC request message; or when the UE initiates 2-step SDT, a transmission resource obtained by the UE from a broadcast message is less than a sum of resources for transmitting a random access preamble, small data, and an RRC request message. In this case, the UE may first send a part of the small data by using a msg3 or a msgA, and then transmit a remaining part of the small data in a subsequent transmission phase. For example, after sending the contention resolution to the UE, the base station may dynamically schedule an uplink resource for the UE to perform subsequent transmission.

Example 2: RA-SDT currently initiated by the UE is used for transmitting a plurality of pieces of small data. After the small data arrives, the UE may initiate 4-step SDT or 2-step SDT, and transmit the small data by using a msg3 or a msgA. However, in this SDT process, the UE obtains new small data, and the UE may transmit the new small data in a subsequent transmission phase. For example, after sending a contention resolution to the UE, the base station may dynamically schedule an uplink resource for the UE to perform subsequent transmission.

FIG. 9 is an example of a schematic flowchart of a CG-SDT process on a user plane. The process shown in FIG. 9 may include but is not limited to the following steps.

S311: A UE sends an RRC request message and uplink small data to a base station on a preconfigured resource.

For example, the preconfigured resource is a configured resource type 1 (configured grants type 1, CG Type 1) or a PUR. The CG Type 1 may be an uplink resource directly configured by an RRC layer, and may include but is not limited to a time-frequency resource position and a resource periodicity of the uplink resource.

In some embodiments, when both the base station and the UE support CG-SDT, and the UE satisfies a condition for using the CG-SDT, the UE may perform S311 without performing RA. The condition for using the CG-SDT includes, for example, that the UE is in a non-RRC connected state, the UE needs to transmit uplink small data, the UE has a preconfigured resource, the UE satisfies an RSRP condition, and the UE has a valid TA.

In some embodiments, the condition for the UE to determine to use the CG-SDT includes at least one of the following:
Condition 1: A TAT runs, that is, a TA of the UE is valid, and the UE and the base station are in an uplink synchronization state. This may indicate that the CG-SDT is valid; otherwise, the CG-SDT is invalid.
Condition 2: On the premise that a TAT runs, a current RSRP of the UE is greater than a preset first RSRP threshold (RSRP 1 for short). This may indicate that the CG-SDT is valid. Optionally, the RSRP 1 may be an RSRP at which the UE can initiate SDT. In other words, if the current RSRP of the UE is greater than the preset RSRP 1, it indicates that the UE is close to the base station and channel quality is good. If the CG-SDT is performed, a success rate is high, and the CG-SDT is valid. If the current RSRP of the UE is less than or equal to the preset RSRP 1, it indicates that the UE is far away from the base station and the channel quality is poor. If the CG-SDT is performed, a success rate is low. The RSRP 1 may be configured by the base station for both the CG-SDT and RA-SDT.
Condition 3: In a preset time period in which a TA is valid last time, an increase or a decrease of an RSRP of the UE is less than or equal to a preset second RSRP threshold (RSRP 2 for short). This may indicate that the CG-SDT is valid. In other words, whether the UE moves may be determined based on the increase or decrease of the RSRP of the UE. If the increase or decrease of the RSRP is greater than or equal to the RSRP 2, it indicates that the UE moves or moves for a long distance relative to the time period in which the TA is valid last time. If the CG-SDT is performed, a success rate is low, and the CG-SDT is invalid. If the increase or decrease of the RSRP is less than the RSRP 2, it indicates that the UE does not move or moves for a short distance relative to the time period in which the TA is valid last time. If the CG-SDT is performed, a success rate is high, and the CG-SDT is valid.
Condition 4: If the base station configures the CG-SDT on a SUL and/or an NUL, the UE needs to compare a current RSRP with a third RSRP threshold (RSRP 3 for short) preset by the base station, to determine whether the CG-SDT configured on the SUL is valid or the CG-SDT configured on the NUL is valid. Optionally, assuming that the CG-SDT is configured on both the SUL and the NUL, the UE compares the current RSRP with the RSRP 3. If the current RSRP is less than the RSRP 3, the UE selects the CG-SDT on the SUL; or if the current RSRP is greater than or equal to the RSRP 3, the UE selects the CG-SDT on the NUL. In other words, when the base station configures the CG-SDT on both the SUL and the NUL, if the current RSRP of the UE is less than the RSRP 3, it indicates that the UE is far away from the base station, and needs to use the CG-SDT configured on the SUL, that is, the CG-SDT on the SUL is valid, and the CG-SDT on the NUL is invalid. If the current RSRP of the UE is greater than or equal to the RSRP 3, it indicates that the UE is close to the base station, and needs to use the CG-SDT configured on the NUL, that is, the CG-SDT on the NUL is valid, and the CG-SDT on the SUL is invalid. Optionally, assuming that the base station configures the CG-SDT only on the SUL, the UE compares the current RSRP with the RSRP 3. If the current RSRP is less than the RSRP 3, the CG-SDT on the SUL is selected. In this case, the CG-SDT is valid. If the current RSRP is greater than or equal to the RSRP 3, the CG-SDT cannot be used, that is, the CG-SDT on the SUL is invalid. In other words, when the base station configures the CG-SDT on the SUL, and the UE is far away from the base station, the CG-SDT on the SUL can be used; otherwise, the CG-SDT on the SUL is invalid. Optionally, assuming that the base station configures the CG-SDT only on the NUL, the UE compares the current RSRP with the RSRP 3. If the current RSRP is less than the RSRP 3, the CG SDT cannot be used. If the current RSRP is greater than or equal to the RSRP 3, the CG SDT on the NUL is selected, that is, the CG-SDT on the NUL is valid. In other words, when the base station configures the CG-SDT on the NUL, and the UE is close to the base station, the CG-SDT on the NUL can be used; otherwise, the CG-SDT on the NUL is invalid.
Condition 5: The UE is in coverage of the base station, and the base station has configured a CG resource used for the CG-SDT for the UE.

In some embodiments, before S311, the UE may further request the base station to configure a preconfigured resource used for initiating the CG-SDT. For example, the UE in an RRC connected state sends a CG-SDT resource request message to the base station. The CG-SDT resource request message is used for requesting the base station to configure the CG-SDT. For example, in LTE, the UE sends a PUR configuration information request (PURConfigurationRequest) message to the base station.

Optionally, the UE may send the CG-SDT resource request message to the base station at any moment in the RRC connected state. Optionally, the UE in the RRC connected state may determine that there may be small data in the future, and may send the CG-SDT resource request message to the base station. Optionally, when the UE is in the RRC connected state, and the UE does not need to transmit data with the base station in a preset time period, the UE determines that the UE may be about to enter the non-RRC connected state. To transmit small data when the UE is in the non-RRC connected state, the UE may send the CG-SDT resource request message to the base station.

In some embodiments, after the base station receives the configuration information request (for example, the CG-SDT resource request message or the PURConfigurationRequest message), when the base station indicates the UE to switch from the RRC connected state to the non-RRC connected state, an RRC response message sent by the base station to the UE may carry detailed configuration information of the CG-SDT. For example, when the base station indicates the UE to switch from the RRC connected state to an RRC inactive state, the RRC response message is an RRCRelease message, and the RRCRelease message may carry detailed configuration information of the CG resource. For example, when the base station indicates the UE to switch from the RRC connected state to an RRC idle state, the RRC response message is an RRCRelease message, and the RRCRelease message may carry detailed configuration information of the PUR.

This is not limited to the foregoing enumerated cases. In some other embodiments, after configuring the CG-SDT for the UE, the base station may send, to the UE, an RRC response message carrying release indication information, so as to release the configured CG-SDT. For example, the RRCRelease message may carry release indication information of the CG resource. For example, the RRCConnectionRelease message may carry release indication information of the PUR.

In some other embodiments, the UE may not send the CG-SDT resource request message to a network device, and the network device may directly configure the CG-SDT resource for the UE. For example, the network device may configure the CG-SDT resource for the UE with reference to a historical communication service situation of the UE.

In some embodiments, the UE may send the uplink small data and the RRC request message to the base station to initiate an RRC connection resume process for the CG-SDT. In some embodiments, in the RRC request message for initiating the RRC connection resume process for the CG-SDT, a resumeCause IE may be set to mo-data.

In some embodiments, the UE first initializes the RRC connection resume process for the SDT, and then sends the RRC request message to the base station based on the CG-SDT.

This is not limited to the foregoing examples. In some other embodiments, UE may send only small data in a CG-SDT process. For example, if a resource indicated by a CG-SDT configuration is a unique resource configured by a network device for the UE and is not a shared resource, the UE may send only the small data on the resource indicated by the CG-SDT configuration in the CG-SDT process. In this way, the network device may identify, based on the resource for receiving the small data, the UE that sends the small data. For another example, if a resource indicated by a CG-SDT configuration is a shared resource configured by a network device for a plurality of UEs, a UE may send small data and an RRC request message on the resource indicated by the CG-SDT configuration when the UE performs SDT. In this way, the network device may identify the UE by using the RRC request message.

For descriptions of the RRC request message and the uplink small data, refer to the descriptions of the RRC request message and the uplink small data in S113 in FIG. 5, and details are not described again.

S312: The base station sends a feedback response message to the UE.

In some embodiments, the base station sends the feedback response message to the UE in response to the RRC request message sent by the UE. In some embodiments, the feedback response message indicates that the RRC request message is successfully transmitted. In some embodiments, the feedback response message indicates that the RRC request message and the uplink small data sent together with the RRC request message are successfully transmitted. In some embodiments, the feedback response message indicates that the uplink small data is successfully transmitted.

In some embodiments, the feedback response message is a layer 1 acknowledgment message (Layer 1 Acknowledgement, Layer 1 Ack), namely, a physical layer ACK.

In some embodiments, the feedback response message is downlink feedback information (downlink feedback information, DFI), namely, a CG-DFI.

In some embodiments, the feedback response message is a MAC CE at a MAC layer.

In some embodiments, the feedback response message is an RRC message at an RRC layer.

S313: The base station sends an RRC response message to the UE.

In some embodiments, if a core network has downlink small data to be sent to the UE, the core network may send the downlink small data to the base station. Then, the base station may send the downlink small data to the UE together with the RRC response message.

For descriptions of the RRC response message, refer to the descriptions of the RRC response message in S115 in FIG. 5. Details are not described again.

In some embodiments, the RRC response message may include a CG-SDT configuration. For example, the CG-SDT configuration in S311 is used by the UE to transmit the small data in S311, and the CG-SDT configuration indicated by the RRC response message in S313 is used by the UE to transmit small data next time.

In some embodiments, when the feedback response message in S312 is an RRC message at the RRC layer, the feedback response message in S312 and the RRC response message in S313 may be a same message. In other words, the feedback response message may be the RRC response message, that is, S312 and S313 are a same step.

FIG. 10 is an example of a schematic flowchart of a CG-SDT process on a control plane. The process shown in FIG. 10 may include but is not limited to the following steps.

S321: A UE sends an RRC request message carrying uplink small data to a base station on a preconfigured resource.

Specifically, S321 is similar to S311 in FIG. 9, and a difference lies in that the uplink small data is not sent together with the RRC request message, but is sent by being carried in the RRC request message.

S322: The base station sends a feedback response message to the UE.

S323: The base station sends an RRC response message to the UE.

Specifically, S322 and S323 are similar to S312 and S313 in FIG. 9, and details are not described again.

FIG. 9 and FIG. 10 are described by using an example in which S311 and/or S321 are/is performed when the UE has uplink small data to be sent to the base station, that is, the UE actively initiates a small data transmission process. However, in a specific implementation, the UE may alternatively passively initiate a small data transmission process as indicated by the base station. The transmission process in this case is similar to the transmission processes shown in FIG. 9 and FIG. 10, and a difference is specifically described as follows:

Before S311, when the core network has downlink small data to be sent to the UE, the core network may send a paging message to the base station. In some embodiments, the paging message may carry data amount information of the downlink small data. In some embodiments, the base station may send a paging message to the UE, so that the UE initiates CG-SDT. Different from the foregoing process in which the UE actively initiates the small data transmission, in S311, the UE may send only an RRC request message to the base station, and does not send the uplink small data, and optionally, may further carry cause information for triggering MT-EDT. Correspondingly, the base station may receive the downlink small data sent by the core network, and in S313, the base station may send the RRC response message and the downlink small data to the UE.

Similarly, before S321, when the core network has downlink small data to be sent to the UE, the core network may send a paging message to the base station. In some embodiments, the paging message may carry data amount information of the downlink small data. In some embodiments, the base station may send a paging message to the UE, so that the UE initiates CG-SDT. Different from the foregoing process in which the UE actively initiates the small data transmission, the RRC message sent by the UE to the base station in S321 may not carry the uplink small data, and optionally, may further carry cause information for triggering the MT-EDT. Correspondingly, the base station may receive the downlink small data sent by the core network. The RRC response message sent by the base station to the UE in S323 may carry the downlink small data.

In a possible implementation, a network device corresponding to a current serving cell of the UE in a non-RRC connected state (for example, an RRC inactive state) does not store a context of the UE. The network device may be referred to as a serving device, and the context of the UE is stored in another network device (which may be referred to as an anchor device). In some embodiments, the anchor device may maintain one or more contexts of one or more UEs in the non-RRC connected state. In some other embodiments, the anchor device may maintain one or more PDCP contexts or functions (for example, security-related configurations of integrity protection and encryption) of one or more UEs in the RRC inactive state. In some embodiments, the anchor device may be a network device to which the UE in the non-RRC connected state is connected when the UE is in the RRC connected state last time. In some other embodiments, the anchor device may be a network device that sends an RRCRelease message to the UE when the UE in the non-RRC connected state is in the RRC connected state last time. The anchor device is, for example, a network device such as an NG-RAN node or a base station.

In the following embodiments, an example in which the serving device is a serving base station and the anchor device is an anchor base station is used for description.

In some embodiments, a UE may leave coverage of an anchor base station that stores the context of the UE, move to another serving base station, and initiate SDT under the another serving base station. For example, after a UE that moves frequently moves to coverage of the serving base station, when the UE in an RRC inactive state needs to perform SDT, the UE may initiate RA-SDT under the current serving base station. If the anchor base station does not send the context of the UE to the serving base station, a role of the anchor base station remains unchanged. If the anchor base station sends the context of the UE to the serving base station, the serving base station becomes an anchor base station of the UE. For example, when UE 1 is in coverage of a base station 1, the base station 1 stores a context of the UE 1. When the UE 1 moves out of the coverage of the base station 1 and enters coverage of a base station 2, the base station 2 is a serving base station of the UE 1. If the base station 1 does not send the context of the UE 1 to the base station 2, a role of the base station 1 remains unchanged, and the base station 1 is still an anchor base station of the UE 1. When the UE 1 moves out of the coverage of the base station 2 again and enters coverage of a base station 3, the base station 3 is a serving base station of the UE 1. If the base station 1 does not send the context of the UE 1 to the base station 3, the role of the base station 1 remains unchanged, and the base station 1 is still the anchor base station of the UE 1. However, if the base station 1 sends the context of the UE 1 to the base station 3, the base station 1 is not the anchor base station of the UE 1, and the base station 3 becomes the anchor base station of the UE 1. It may be understood that, in addition to the anchor base station that stores the context of the UE, all other base stations may be used as serving base stations of the UE.

For example, in NR, the anchor base station may be referred to as an anchor gNB (anchor gNB), may be referred to as a last serving gNB (last serving gNB), or may be referred to as an old gNB (old gNB). The serving base station may be referred to as a new serving gNB (new serving gNB), may be referred to as a current serving gNB (current serving gNB), or may be referred to as a new gNB (new gNB).

For brevity of description, in the following embodiments, the anchor base station is referred to as an old station for short, and the serving base station is referred to as a new station for short.

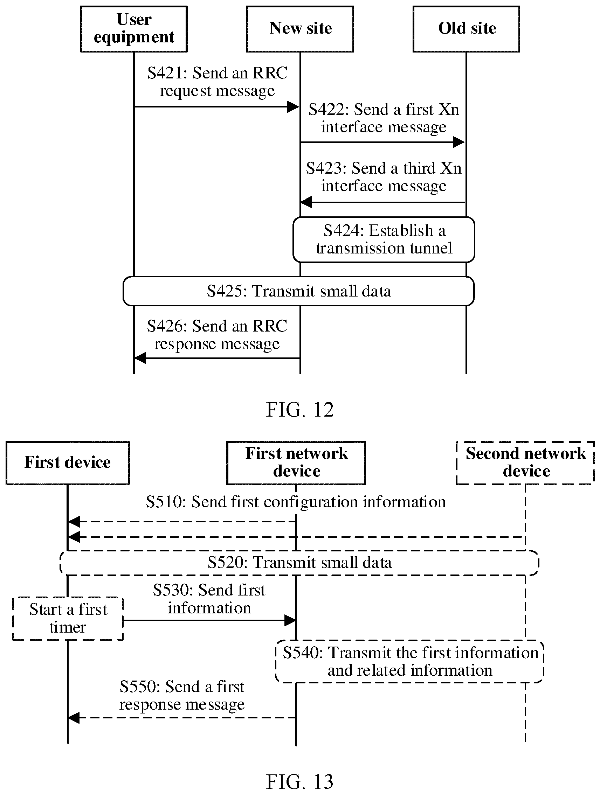

When a UE initiates SDT (for example, RA-SDT) under the new station, the new station may obtain a context of the UE by performing anchor relocation (anchor relocation). In some embodiments, the old station determines to perform anchor relocation, and the new station may obtain the context of the UE from the old station. For a specific procedure example, refer to FIG. 11. In some other embodiments, the old station determines not to perform anchor relocation, and the new station cannot obtain the context of the UE from the old station. For a specific procedure example, refer to FIG. 12.

FIG. 11 is an example of a schematic flowchart of an anchor relocation process. The process shown in FIG. 11 may include but is not limited to the following steps.

S411: A UE sends an RRC request message to a new site.

Specifically, when initiating SDT under the new station, the UE may send the RRC request message to the new station, for example, send an RRCResumeRequest message when initiating RA-SDT. For an example of the RRC request message, refer to the RRC request message in the SDT process shown in FIG. 5 to FIG. 10, which is not limited thereto, and may alternatively be another RRC message used for initiating SDT.

S412: The new site sends a first Xn interface message to an old site.

In some embodiments, the new site may send the first Xn interface message to the old site through an Xn interface, to request to obtain a context of the UE.

In some embodiments, the first Xn interface message is a UE context obtaining request (RetrieveUEContextRequest) message.

In some embodiments, the RRC request message sent by the UE to the new site includes information about the old site, and the new site may obtain the information about the old site by using the RRC request message. For example, the new site may obtain the information about the old site based on an I-RNTI carried in the RRCResumeRequest message.

S413: The old station sends a second Xn interface message to the new station in response to the first Xn interface message sent by the new station.

In some embodiments, the old station may send the second Xn interface message to the new station through the Xn interface in response to the request of the new station for obtaining the context of the UE.

In some embodiments, when the old station determines to perform anchor relocation (which may also be understood as that the old station determines to change an anchor base station), the old station may send the second Xn interface message to the new station through the Xn interface. Optionally, the second Xn interface message may include the context of the UE.

In some embodiments, the second Xn interface message is a UE context obtaining response (RetrieveUEContextResponse) message. S414: The new station sends a path switch request message to a core network device.

S415: The core network device sends a path switch response message to the new station.

Specifically, after obtaining the context of the UE, the new station may perform path switching, for example, perform S414 and S415. The core network device is, for example, an AMF. After performing path switching, the new station may perform the foregoing SDT with the UE. For details, refer to the SDT process shown in FIG. 5 to FIG. 10, where the new station is a base station.

S416: The new site sends an RRC response message to the UE.

Specifically, the new station may generate the RRC response message and send the RRC response message to the UE. Optionally, the RRC response message is used for ending the SDT between the new station and the UE. For example, when the UE does not need to perform SDT, the new station performs S416. For an example of the RRC response message, refer to the RRC response message in the SDT process shown in FIG. 5 to FIG. 10.

FIG. 12 is an example of a schematic flowchart of another anchor relocation process. The process shown in FIG. 12 may include but is not limited to the following steps.

S421: A UE sends an RRC request message to a new site.

S422: The new site sends a first Xn interface message to an old site.

Specifically, S421 and S422 are similar to S411 and S412 in FIG. 11. For details, refer to descriptions of S411 and S412 in FIG. 11.

S423: The old station sends a third Xn interface message to the new station in response to the first Xn interface message sent by the new station.

In some embodiments, the old station may send the third Xn interface message to the new station through the Xn interface in response to the request of the new station for obtaining the context of the UE.

In some embodiments, when the old station determines not to perform anchor relocation (which may also be understood as that the old station determines not to change an anchor base station), the old station sends the third Xn interface message to the new station through the Xn interface. Optionally, the third Xn interface message may not include an entire context of the UE. For example, the third Xn interface message may not include a PDCP layer-related context of the UE, and includes only an RLC layer-related context of the UE.

In some embodiments, the third Xn interface message is a UE context obtaining failure (RetrieveUEContextFailure) message. In some other embodiments, the third Xn interface message is a RetrieveUEContextResponse message.

S424: The new site establishes a transmission tunnel.

Specifically, when receiving the third Xn interface message, the new station may establish a data transmission tunnel (tunnel). This may also be understood as performing transmission tunnel establishment (forwarding tunnel establishment). In some embodiments, the transmission tunnel may be used by the new station to forward information about SDT for the UE and the old station, for example, may be used to perform S425.

S425: The UE transmits small data.

Specifically, that the UE transmits small data may include: The new site forwards information about an SDT process for the UE and the old site. A specific process is similar to the SDT process shown in FIG. 5 to FIG. 10, and a difference lies in that the base station is replaced with the new site and the old site. Optionally, the new site is configured to perform the step of transmitting the information by the base station, and optionally, the old site is configured to perform the step of generating the information by the base station.

In some embodiments, the new site may forward the information about the SDT process to the old site for the UE. For example, after receiving the RRC request message sent by the UE, the new site may forward the RRC request message to the old site. For another example, after receiving uplink small data sent by the UE, the new site may forward the uplink small data to the old site. For another example, the new site may forward information sent by the UE in a subsequent transmission phase to the old site.

In some embodiments, the new site may forward the information about the SDT process to the UE for the old site. For example, the old site generates an RRC response message and sends the RRC response message to the new site, and the new site may forward the RRC response message to the UE (for example, S426). For another example, the new site may forward, to the UE in S426, downlink small data sent by the old site. For another example, the new site may forward, information sent by the old site in a subsequent transmission phase to the UE.

S426: The new site sends an RRC response message to the UE.

Specifically, the new site may forward the RRC response message to the UE for the old site, where the RRC response message is generated by the old site. Optionally, the RRC response message is used for ending the SDT between the new site and the UE. For example, the new site forwards the RRC response message when the UE does not need to perform SDT. For an example of the RRC response message, refer to the RRC response message in the SDT process shown in FIG. 5 to FIG. 10.

In some embodiments, the RRC response message sent by the old station to the new station is included in the third Xn interface message in S423. For example, after receiving the third Xn interface message, the new station may first store the RRC response message, and send the RRC response message to the UE when the UE does not need to perform SDT. For example, the RRC response message is an RRCRelease message.

In some other embodiments, the RRC response message sent by the old station to the new station is not included in the third Xn interface message in S423, and may be included in another Xn interface message. For example, when determining that the UE does not need to perform SDT, the old station sends, to the new station, an Xn interface message (for example, a UE context release (UE CONTEXT RELEASE) message, an RRC transfer (RRC TRANSFER) message, or another existing Xn interface message, or a new Xn interface message) that includes the RRC response message, and then, the new site sends the RRC response message to the UE based on the Xn interface message. For example, in the communication system shown in FIG. 1, a current serving cell of the UE 110 corresponds to the base station 210, but the base station 210 does not store a context of the UE 110, that is, the base station 210 is a new site of the UE 110. Before moving to the base station 210, the UE 110 is located in coverage of the base station 230, and the base station 230 stores the context of the UE 110, that is, the base station 230 is an old site of the UE 110. When the UE 110 initiates SDT under the base station 210, the base station 210 may request to obtain the context of the UE 110 from the base station 230. If the base station 230 determines to perform anchor relocation, the base station 210 may obtain the context of the UE 110, and the base station 210 may directly perform SDT with the UE 110, for example, the procedure shown in FIG. 11. If the base station 230 determines not to perform anchor relocation, the base station 210 cannot obtain the context of the UE 110, and the base station 210 may forward information about the SDT for the UE 110 and the base station 230, for example, the procedure shown in FIG. 12. The base station 220 corresponding to a current serving cell of the UE 120 may store a context of the UE 120. When the UE 120 initiates SDT under the base station 220, the base station 220 may directly perform SDT with the UE 120.

When a terminal and a network device perform SDT, a case in which the terminal cannot continue the SDT may occur. A specific scenario example is as follows (it is assumed that the terminal is a multi-card terminal, and the multi-card terminal includes a subdevice A and a subdevice B):

Scenario 1: When the subdevice A and the network device perform SDT (for example, RA-SDT or CG-SDT), if the subdevice B has a data transmission requirement, and the data transmission requirement requires the subdevice B to enter an RRC connected state, for example, enter the RRC connected state to perform non-SDT data transmission, the subdevice A needs to stop the current SDT for the subdevice B to perform data transmission.

Scenario 2: When the subdevice A and the network device perform SDT (for example, RA-SDT or CG-SDT), if the subdevice B needs to send a system information request or receive a downlink message, for example, a periodic downlink message such as paging, system information, or radio resource management (radio resource management, RRM), or another aperiodic downlink message, for the subdevice B to perform data transmission, the subdevice A needs to stop the current SDT.

In the foregoing case, the network device still schedules a resource used for the SDT. For example, the network device communicating with the subdevice A cannot learn that the subdevice A does not continue to monitor scheduling used for the SDT, but performs service transmission of the subdevice B. Therefore, the network device still continues to schedule, for the subdevice A, the resource used for the SDT. In other words, there is a problem that an air interface resource is wasted, and there is no efficient transmission solution that can be applied to the foregoing case.

An embodiment of this application provides a transmission control method, which may be applied to a communication system. The communication system may include a first device and a first network device. The first device may send, to the first network device, information indicating that the first device does not continue to monitor SDT, to avoid a case in which when the first device does not monitor the SDT, the first network device continues to schedule a resource for the SDT, so as to save air interface resources.

The following describes, based on the foregoing descriptions, the transmission control method provided in embodiments of this application.

The method may be applied to a communication system, for example, the communication system shown in FIG. 1. The communication system may include a first device and a first network device. In some embodiments, the communication system further includes a second network device.

In some embodiments, the first device is a multi-card terminal, and the multi-card terminal includes a first subdevice. For example, the first device is the multi-card terminal 100 shown in FIG. 1, and the first subdevice is the UE 110 or the UE 120 included in the multi-card terminal 100. The first device may perform the transmission control method by using the first subdevice. In other words, in the following transmission control method, the first device may be replaced with the first subdevice, and the first device (performing a step) may be replaced with the first device (performing a step) by using the first subdevice. In some other embodiments, the first device is a subdevice included in a multi-card terminal. For example, the first device is the UE 110 or the UE 120 included in the multi-card terminal 100 shown in FIG. 1. The following embodiment is described by using an example in which the first device is the subdevice included in the multi-card terminal.

In some embodiments, a network device corresponding to a current serving cell of the first device is the first network device, and the first network device stores a user context of the first device. For example, when the first device moves to coverage of the first network device and initiates SDT under the first network device, the first network device obtains the user context of the first device from an anchor device. For a specific example, refer to the procedure shown in FIG. 11. For example, the first device is the multi-card terminal 100 (in this case, the first subdevice is the UE 120) or the UE 120 included in the multi-card terminal 100 shown in FIG. 1, and the first network device is the base station 220.

In some other embodiments, a network device corresponding to a current serving cell of the first device is the first network device, the first network device does not store a user context of the first device, and the user context of the first device is stored in the second network device. For example, when the first device moves to coverage of the first network device and initiates SDT under the first network device, the first network device may request to obtain the user context of the first device from the second network device, but the second network device determines not to perform anchor relocation, that is, the second network device is still an anchor device of the first device. Therefore, the first network device does not obtain the user context of the first device from the second network device. For a specific example, refer to the procedure shown in FIG. 12. That is, the first network device is a new station, and the second network device is an old station. For example, the first device is the multi-card terminal 100 (in this case, the first subdevice is the UE 110) or the UE 110 included in the multi-card terminal 100 shown in FIG. 1, the first network device is the base station 210, and the second network device is the base station 230.

FIG. 13 is a schematic flowchart of a transmission control method according to an embodiment of this application. The method includes but is not limited to the following steps.

S510: A first device receives first configuration information.

In some embodiments, S510 is an optional step.

In some embodiments, the first device is a multi-card terminal, the multi-card terminal includes a first subdevice, and the first device receives the first configuration information through the first subdevice. In some embodiments, the first device is a first subdevice included in a multi-card terminal, and the first device receives the first configuration information. In the following descriptions, an example in which the first device is the first subdevice included in the multi-card terminal is used for description.

In some embodiments, the first configuration information indicates reporting of first information. Optionally, the first configuration information indicates to set up and/or release the reporting of the first information. Optionally, the first configuration information indicates to enable and/or disable the reporting of the first information. Optionally, the first configuration information indicates that a device (for example, the first device) may report the first information. Optionally, the first configuration information indicates that a current network device (for example, a first network device) supports a device (for example, the first device) in reporting the first information. Optionally, the first configuration information indicates that a device (for example, the first device) in an RRC inactive state may report the first information. In some embodiments, the first information indicates to request to stop SDT. For details, refer to the descriptions of the first information in S530. Details are not described temporarily.

In some embodiments, the first configuration information includes duration of a first timer. In some other embodiments, the duration of the first timer is sent to the first device by using another message. In some other embodiments, the duration of the first timer is predefined, for example, duration that is of the first timer and that is specified in the 3GPP protocol. The first timer is used by the first device to monitor a response message for the first information.

In some embodiments, the first timer may be a third timer used by the multi-card terminal to request, through reporting, to leave an RRC connected state. In some other embodiments, the first timer may be a newly defined timer. For example, in consideration of a case in which signaling exchange (for example, exchange of the duration of the first timer) may exist between the first network device and a second network device when the first device initiates RA-SDT, duration of the newly defined first timer is greater than duration of the third timer.

In some embodiments, a manner of configuring the first configuration information and the duration of the first timer may be but is not limited to any one of the following:
Manner 1: The first configuration information is sent to the first device by using broadcast system information (for example, a system information block (system information block, SIB) 1), and the first configuration information includes the duration of the first timer.

In a possible implementation, the first device receives the first configuration information that is sent by the first network device by using the broadcast system information. For example, the first device moves to coverage of the first network device, and the first device reads the system information broadcast by the first network device.

In some embodiments, the first configuration information includes a first field, and the first device may read the first field and the duration of the first timer in the system information. The first field may indicate that a current network device (for example, the first network device) supports a device (for example, the first device) in reporting the first information, and/or a device (for example, the first device) may report the first information. For example, the first configuration information indicates to enable and/or disable the reporting of the first information. The first field and the duration of the first timer are optional fields in the SIB 1. Both the first field and the duration of the first timer are of an enumerated type. When a value of the first field in the SIB 1 is "true", it indicates that "a current base station supports a UE in reporting the first information, and the UE may report the first information", and the duration of the first timer is the duration indicated in the SIB 1.

In some other embodiments, the first configuration information indicates to set up and/or release the reporting of the first information. For example, when the first configuration information in the SIB 1 indicates "setup", it indicates "the current base station supports the UE in reporting the first information, and the UE may report the first information". When the first configuration information in the SIB 1 indicates "release", it indicates "the current base station does not support the UE in reporting the first information, and the UE cannot report the first information". The first configuration information in the SIB 1 includes the duration of the first timer.

In some other embodiments, the first configuration information does not include the first field. When the system information includes the duration of the first timer, it indicates that the current network device supports the device in reporting the first information, and/or the device may report the first information. For example, the duration of the first timer is an optional field in the SIB 1, the duration of the first timer is of an enumerated type, and the duration of the first timer is the duration indicated in the SIB 1. When the SIB 1 includes the duration of the first timer, it indicates "a current base station supports a UE in reporting the first information, and the UE may report the first information".

Manner 2: The first configuration information is sent to the first device by using broadcast system information (for example, a SIB 1), and the duration of the first timer is sent to the first device by using an RRC message.

In a possible implementation, the first device receives the first configuration information that is sent by the first network device by using the broadcast system information. For example, the first device moves to coverage of the first network device, and the first device reads the system information broadcast by the first network device.

In some embodiments, the first configuration information includes a first field. The first device may read the first field in the system information. The first field may indicate that a current network device supports a device in reporting the first information, and/or a device may report the first information. For example, the first configuration information indicates to enable and/or disable the reporting of the first information. The first field is an optional field in the SIB 1, and the first field is of an enumerated type. When a value of the first field in the SIB 1 is "true", it indicates "a current base station supports a UE in reporting of the first information, and the UE may report the first information". In some other embodiments, the first configuration information indicates to set up and/or release the reporting of the first information. For example, when the first configuration information in the SIB 1 indicates "setup", it indicates "the current base station supports the UE in reporting the first information, and the UE may report the first information". When the first configuration information in the SIB 1 indicates "release", it indicates "the current base station does not support the UE in reporting the first information, and the UE cannot report the first information".

In a possible implementation, the first device receives the duration that is of the first timer and that is sent by the first network device by using an RRC message. For example, the RRC message is an RRC reconfiguration (RRCReconfiguration) message sent by the first network device when the first device and the first network device perform SDT.

In another possible implementation, the first device receives the duration that is of the first timer and that is sent by the second network device by using an RRC message. Optionally, a user context that is of the first device and that is stored in the second network device includes the duration of the first timer. For example, the RRC message is an RRCRelease message. After receiving the RRCRelease message, the first device enters the RRC inactive state from the RRC connected state. For another example, the RRC message is an RRCRelease message used for ending the SDT. For another example, the RRC message is an RRCReconfiguration message sent by the second network device when the first device and the second network device perform SDT. For another example, the RRC message is an RRCReconfiguration message sent by the second network device when the first device is in the RRC connected state. Optionally, the first device does not release the configured duration of the first timer when initiating, under the first network device, a resume procedure (resume procedure) corresponding to the SDT.

In some embodiments, when the RRC message is an RRCReconfiguration message, another configuration IE (OtherConfig IE) in the RRCReconfiguration message may indicate the duration of the first timer, which is not limited thereto. Alternatively, another existing IE or a newly added IE may indicate the duration of the first timer.

In some other embodiments, when the RRC message is an RRCRelease message, a suspend configuration IE (suspendconfig IE) in the RRCRelease message may indicate the duration of the first timer, or an SDT configuration IE (SDTConfig IE) in the RRCRelease message may indicate the duration of the first timer, or another existing IE or a newly added IE may indicate the duration of the first timer.

The RRC message is not limited to the RRC messages in the foregoing examples, and another type of RRC message, for example, the RRC response message in the SDT process shown in FIG. 5 to FIG. 12, may be used. This is not limited in this application.

Manner 3: The first configuration information is sent to the first device by using an RRC message. In some embodiments, the first configuration information includes the duration of the first timer. In some other embodiments, the duration of the first timer is sent to the first device by using another RRC message.

In a possible implementation, the first device receives the first configuration information that is sent by the first network device by using a first RRC message, where the first configuration information includes the duration of the first timer.

In another possible implementation, the first device receives the first configuration information that is sent by the second network device by using a second RRC message, where the first configuration information includes the duration of the first timer.

In another possible implementation, the first device receives the first configuration information that is sent by the first network device by using a first RRC message, and receives the duration that is of the first timer and that is sent by the second network device by using a second RRC message.

In another possible implementation, the first device receives the duration that is of the first timer and that is sent by the first network device by using a first RRC message, and receives the first configuration information that is sent by the second network device by using a second RRC message.

For an example of the first RRC message, refer to the RRC message used by the first network device to send the duration of the first timer in the manner 2. For an example of the second RRC message, refer to the RRC message used by the second network device to send the duration of the first timer in the manner 2.

In some embodiments, the first configuration information includes a first field and the duration of the first timer, and the first device may read the first field and the duration of the first timer in the RRC message. The first field may indicate that a device (for example, the first device) may report the first information. For example, the first configuration information indicates to enable and/or disable the reporting of the first information. The first field and the duration of the first timer are optional fields in the RRC message. Both the first field and the duration of the first timer are of an enumerated type. When a value of the first field in the RRC message is "true", it indicates that "UE may report the first information", and the duration of the first timer is the duration indicated in the RRC message.

In some other embodiments, the first configuration information indicates to set up and/or release the reporting of the first information. For example, when the first configuration information in the RRC message indicates "setup", it indicates that "the UE may report the first information"; or when the first configuration information in the RRC message indicates "release", it indicates that "the UE cannot report the first information", and the first configuration information in the RRC message includes the duration of the first timer.

In some other embodiments, the first configuration information includes the duration of the first timer, but does not include the first field. When the RRC message includes the duration of the first timer, it indicates that the device may report the first information. For example, the duration of the first timer is an optional field in the RRC message, the duration of the first timer is of an enumerated type, and the duration of the first timer is the duration indicated in the RRC message. When the RRC message indicates the duration of the first timer, it indicates that "UE may report the first information".

In some embodiments, the method further includes: The first device receives system information (for example, a SIB 1) sent by the first network device, where the system information may indicate that a current network device (for example, the first network device) supports a device (for example, the first device) in reporting the first information. For example, when a value of the first information in the SIB 1 is "true", it indicates "a current base station supports a UE in reporting the first information".

Manner 4: The first configuration information is sent to the first device by using an RRC message, and the duration of the first timer is sent to the first device by using broadcast system information (for example, a SIB 1).

In a possible implementation, the first device receives the first configuration information that is sent by the first network device by using an RRC message. For an example of the RRC message, refer to the RRC message used by the first network device to send the duration of the first timer in the manner 2.

In another possible implementation, the first device receives the first configuration information that is sent by the second network device by using an RRC message. For an example of the RRC message, refer to the RRC message used by the second network device to send the duration of the first timer in the manner 2.

In some embodiments, the first configuration information includes a first field. The first device may read the first field in the RRC message. The first field may indicate that a device may report the first information. For example, the first configuration information indicates to enable and/or disable the reporting of the first information. The first field is an optional field in the RRC message, and the first field is of an enumerated type. When a value of the first field in the RRC message is "true", it indicates "UE may report the first information".

In some other embodiments, the first configuration information indicates to set up and/or release the reporting of the first information. For example, when the first configuration information in the RRC message indicates "setup", it indicates that "the UE may report the first information"; or when the first configuration information in the SIB 1 indicates "release", it indicates "the UE cannot report the first information".

In a possible implementation, the first device receives the duration that is of the first timer and that is sent by the first network device by using the broadcast system information. For example, the duration of the first timer is an optional field in the SIB 1, the duration of the first timer is of an enumerated type, and the duration of the first timer is the duration indicated in the SIB 1. Optionally, when the system information includes the duration of the first timer, it indicates that a current network device (for example, the first network device) supports a device (for example, the first device) in reporting the first information. For example, when the SIB 1 indicates the duration of the first timer, it indicates "a current base station supports a UE in reporting the first information".

In some embodiments, the method further includes: The first device receives system information (for example, a SIB 1) sent by the first network device, where the system information may indicate that a current network device (for example, the first network device) supports a device (for example, the first device) in reporting the first information. For example, when a value of the first information in the SIB 1 is "true", it indicates "a current base station supports a UE in reporting the first information".

Manner 5: The first configuration information is sent to the first device by using an RRC message or broadcast system information, and the duration of the first timer is predefined.

In some embodiments, the duration of the first timer is duration pre-specified in a protocol. In some other embodiments, the duration of the first timer is pre-coordinated by the first device and the first network device. Optionally, the duration of the first timer is pre-coordinated by the first device, the first network device, and the second network device.

In a possible implementation, the first device receives the first configuration information that is sent by the first network device by using broadcast system information. For example, the first device moves to coverage of the first network device, and the first device reads the system information broadcast by the first network device. In some embodiments, for specific descriptions of the first configuration information, refer to the descriptions of the first configuration information in the manner 2.

In another possible implementation, the first device receives the first configuration information that is sent by the first network device by using an RRC message. For an example of the RRC message, refer to the RRC message used by the first network device to send the duration of the first timer in the manner 2. In another possible implementation, the first device receives the first configuration information that is sent by the second network device by using an RRC message. For an example of the RRC message, refer to the RRC message used by the second network device to send the duration of the first timer in the manner 2. In some embodiments, for specific descriptions of the first configuration information, refer to the descriptions of the first configuration information in the manner 4.

In some embodiments, before the first device receives the first configuration information and/or before the first device receives the duration of the first timer, the first device may send a first request message. Optionally, the first device sends the first request message to the first network device. Optionally, the first device sends the first request message to the second network device. The first request message indicates to request to configure the reporting of the first information. For example, the first device sends an on demand system (on demand system information, on demand SI) message, an RRC message (for example, the RRC request message in the SDT shown or the RRC message carried on the DCCH in FIG. 5 to FIG. 10), or a medium access control control element (MAC control element, MAC CE) to request the network device to configure the reporting of the first information.

S520: The first device performs SDT.

In some embodiments, S520 is an optional step.

In some embodiments, the first device is the multi-card terminal, the multi-card terminal includes the first subdevice, the first subdevice in the first device is in a non-RRC connected state, and the first device initiates SDT under the first network device through the first subdevice. In some embodiments, the first device is the first subdevice included in the multi-card terminal, the first device is in a non-RRC connected state, and the first device initiates SDT under the first network device. In the following descriptions, an example in which the first device is the first subdevice included in the multi-card terminal is used for description.

In some embodiments, the first network device corresponding to a current serving cell of the first device stores a user context of the first device. When the first device initiates SDT under the first network device, the first device may directly perform the SDT with the first network device, for example, the SDT process shown in FIG. 5 to FIG. 10. The first device is UE, and the first network device is a base station.

In some other embodiments, the first network device corresponding to a current serving cell of the first device does not store a user context of the first device, and the user context of the first device is stored in the second network device; in other words, the first network device is a new station, and the second network device is an old station. When the first device initiates SDT under the first network device, the first network device may forward information about the SDT for the first device and the second network device. Optionally, the first network device may forward, to the second network device, the information that is about the SDT and that is sent by the first device; or may forward, to the first device, the information that is about the SDT and that is sent by the second network device. For a specific example, refer to S425 in FIG. 12.

In some embodiments, the SDT is RA-SDT. For a specific procedure, refer to FIG. 5 to FIG. 8. In some other embodiments, the SDT is CG-SDT. For a specific procedure, refer to FIG. 9 and FIG. 10.

A sequence of S510 and S520 is not limited.

S530: The first device sends the first information to the first network device.

Specifically, the first information indicates to request to stop (stop) the SDT (for example, the SDT in S520). Optionally, the foregoing request for stopping the SDT may alternatively be replaced with expecting to stop the SDT.

In some embodiments, the first device is the multi-card terminal, the multi-card terminal includes the first subdevice, and the first device sends the first information to the first network device through the first subdevice. Optionally, the first information indicates the first subdevice to request to stop the SDT. Optionally, the first information indicates to request to stop the SDT of the first subdevice. In some embodiments, the first device is the first subdevice included in the multi-card terminal, and the first device sends the first information to the first network device. Optionally, the first information indicates the first device to request to stop the SDT. Optionally, the first information indicates to request to stop the SDT of the first device. In the following descriptions, an example in which the first device is the first subdevice included in the multi-card terminal is used for description.

In some embodiments, when the first device is in the non-RRC connected state, the first device sends the first information to the first network device. In some embodiments, when the first device intends to initiate or initiates SDT (for example, the SDT in S520) under the first network device, the first device may send the first information to the first network device.

In some embodiments, when a second subdevice needs to enter the RRC connected state from the non-RRC connected state, the first device sends the first information to the first network device. Optionally, the second subdevice is in the non-RRC connected state. In some embodiments, when the multi-card terminal needs to switch from an SDT service to an RRC connected state service, the first device sends the first information to the first network device. This may also be referred to as that the first device sends the first information to the first network device due to a multi-card reason. For a specific example, refer to the scenario 1 in which when the terminal and the network device perform SDT, the terminal may not continue the SDT. This is not limited thereto, and may further be applied to another scenario such as the scenario 2.

For example, the multi-card terminal is a smartphone, and two telephone cards, namely, the first subdevice and the second subdevice, may be installed on the smartphone. When a user transmits an instant messaging message with another terminal by using one telephone card (namely, the first subdevice) on the smartphone, for example, communicates with another terminal through the first network device by using mobile data of the first subdevice in this case, the smartphone may receive an incoming call for the other telephone card (namely, the second subdevice). When the user answers the incoming call by using (the second subdevice of) the smartphone, if the instant messaging message cannot be transmitted through the first subdevice, the first subdevice may send the first information to the first network device.

In a possible implementation, the first information may be sent by using an RRC message carried on a DCCH, for example, user equipment assistance information (UEAssistanceInformation), user equipment capability information (UECapabilityInformation), or another message carried on the DCCH. In some embodiments, the first information may be an existing field in the RRC message carried on the DCCH. For example, the first information is a release preference (ReleasePreference) IE in the UEAssistanceInformation message, and the ReleasePreference IE may include a parameter: a preferred RRC state (preferredRRC-State). A value of preferredRRC-State may be idle, inactive, or connected. When the value of preferredRRC-State is inactive, the first network device may determine that the first device requests to stop the current SDT. In some other embodiments, the first information may be a newly added field in the RRC message carried on the DCCH. For example, the first information is a new IE (new IE) in the UEAssistanceInformation message.

In a possible implementation, the SDT is RA-SDT (for a specific example, refer to FIG. 5 to FIG. 8). In some embodiments, the first device may send the first information to the first network device before receiving a contention resolution message or a msgB, for example, send the first information before sending an RRC request message, or send the first information when sending the RRC request message (for example, the RRC request message carries the first information). In some other embodiments, after receiving a contention resolution message or a msgB, the first device may send the first information in a subsequent transmission phase. For example, the first device sends the first information on a dynamically scheduled uplink resource. This is not limited to the foregoing examples. In some other embodiments, if the first device intends to initiate the RA-SDT and also intends to send the first information, for example, intends to send the first information before sending an RRC request message, the first device may determine, based on an implementation of the first device, whether to send the first information and whether to continue the current SDT, for example, not to send the first information, and cancel the current SDT (where the RRC request message may not be sent).

In another possible implementation, the SDT is CG-SDT (for a specific example, refer to FIG. 9 and FIG. 10). In some embodiments, the first device may send the first information to the first network device before receiving a feedback response message. For example, the first device sends the first information before sending an RRC request message. For another example, the first device sends the first information when sending an RRC request message. In some other embodiments, the first device may send the first information in a subsequent transmission phase after receiving a feedback response message. For example, the first device sends the first information on a dynamically scheduled uplink resource. For another example, the first device sends the first information on a CG-SDT resource. This is not limited to the foregoing examples. In some other embodiments, if the first device intends to initiate the CG-SDT and also intends to send the first information, for example, intends to send the first information before sending an RRC request message, the first device may determine, based on an implementation of the first device, whether to send the first information and whether to continue the current SDT, for example, not to send the first information, and cancel the current SDT (where the RRC request message may not be sent).

In some embodiments, when sending the first information, the first device starts the first timer. Optionally, the first timer is used by the first device to monitor a response message for the first information. Optionally, during running of the first timer, the first device monitors a response message (for example, the first response message in S550) sent by the first network device. For an example of the response message, refer to the RRC response message in the SDT shown in FIG. 5 to FIG. 10, for example, the RRCRelease message.

In some embodiments, if the first device receives, before the first timer expires, the response message sent by the first network device (for example, the first network device performs S550), the first device may stop the first timer. For details, refer to the descriptions of S550. Details are not described temporarily. In some other embodiments, when the first timer expires, if the first device still does not receive the response message (for example, the first response message in S550) sent by the first network device, the first device may enter an RRC idle state.

In some embodiments, after sending the first information, the first device does not monitor scheduling of the SDT, but the second subdevice performs data transmission.

S540: The first network device and the second network device transmit the first information and other related information.

In some embodiments, S540 is an optional step.

In some embodiments, the first network device corresponding to a current serving cell of the first device does not store the user context of the first device, and the user context of the first device is stored in the second network device; in other words, the first network device is a new station, and the second network device is an old station. In this case, after receiving the first information sent by the first device, the first network device forwards the first information to the second network device. Optionally, S540 is performed in a scenario in which the old station (the second network device) determines not to perform anchor relocation, and the new station (the first network device) cannot obtain the user context of the first device from the old station (the second network device). Optionally, the SDT initiated by the first device is the RA-SDT. In other words, S540 is performed in a scenario in which the RA-SDT is initiated and the anchor device is not changed.

In some embodiments, the first network device and the second network device exchange information by using an Xn interface message. The following descriptions use an example in which a message exchanged between the first network device and the second network device is an Xn interface message for description.

In some embodiments, after receiving the first information sent by the first device, the first network device may send the first message to the second network device. The first message includes the first information. Optionally, the first message is the first Xn interface message (for example, the RetrieveUEContextRequest message) shown in FIG. 11 and FIG. 12, another existing Xn interface message, or a new Xn interface message.

In some embodiments, the first network device may receive a second message sent by the second network device, where the second message includes a first response message, and the second message is used by the first network device to send the first response message to the first device before the first timer expires. For example, the second message is used by the first network device to perform S550. For an example of the first response message, refer to the RRC response message in the SDT shown in FIG. 5 to FIG. 10, for example, the RRCRelease message. For example, the second message is the third Xn interface message (for example, the RetrieveUEContextFailure message) shown in FIG. 12, another existing Xn interface message, or a new Xn interface message.

In some embodiments, before sending the first message to the second network device, the first network device receives a second message sent by the second network device. Optionally, the second message is the third Xn interface message shown in FIG. 12, for example, the RetrieveUEContextFailure message. In some other embodiments, after the first network device sends the first message to the second network device, the second network device sends a second message to the first network device. Optionally, the second network device may generate a first response message based on the first information in the first message, and generate the second message including the first response message.

In some embodiments, a message including the duration of the first timer may be transmitted between the first network device and the second network device. Details are as follows:
In a possible implementation, a manner of configuring the first configuration information and the duration of the first timer is the manner 1 or the manner 4 in S510; in other words, the first timer used by the first device is configured by the first network device for the first device by using the broadcast system information (for example, the SIB 1). In some embodiments, the duration of the first timer is generated by the first network device. In some other embodiments, the duration of the first timer is sent by the second network device to the first network device by using a fifth message before the duration of the first timer is configured for the first device, and the fifth message includes the duration of the first timer.

In another possible implementation, a manner of configuring the first configuration information and the duration of the first timer is the manner 2 or the manner 3 in S510; in other words, the first timer used by the first device is configured by the first network device or the second network device for the first device by using the RRC message. In some embodiments, the first timer used by the first device is the first timer in the context that is of the first device and that is stored in the second network device. In some other embodiments, the first timer used by the first device is configured by the first network device for the first device. In a possible case, the duration of the first timer is generated by the first network device. In another possible case, the duration of the first timer is sent by the second network device to the first network device by using a fifth message before the duration of the first timer is configured for the first device, and the fifth message includes the duration of the first timer.

In another possible implementation, a manner of configuring the first configuration information and the duration of the first timer is the manner 5 in S510; in other words, the duration of the first timer used by the first device is predefined, and the first network device and the second network device may not exchange the duration of the first timer.

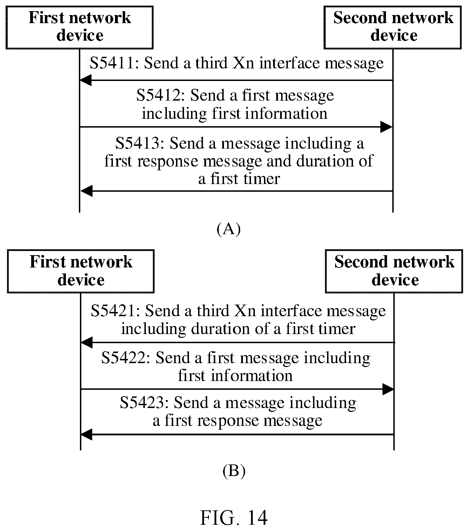

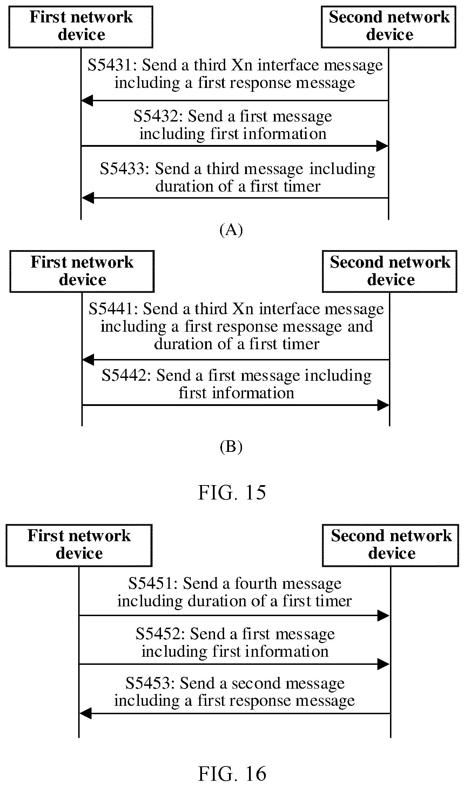

In some embodiments, the first timer used by the first device is the first timer in the context that is of the first device and that is stored in the second network device. After receiving the first information sent by the first device, the first network device may receive a third message sent by the second network device. The third message includes the duration of the first timer. The duration of the first timer may be used by the first network device to send the first response message to the first device before the first timer expires. For example, the duration of the first timer is used by the first network device to perform S550. In a possible case, the second message including the first response message is not the third Xn interface message shown in FIG. 12. In this case, a transmission procedure between the first network device and the second network device is shown in FIG. 14. In another possible case, the second message including the first response message is the third Xn interface message shown in FIG. 12. In this case, a transmission procedure between the first network device and the second network device is shown in FIG. 15.

In some other embodiments, the first timer used by the first device is configured by the first network device for the first device, and the duration of the first timer is generated by the first network device. In a possible case, the second message including the first response message is not the third Xn interface message shown in FIG. 12. The first network device may send a fourth message to the second network device, where the fourth message includes the duration of the first timer. The second network device may send the second message to the first network device based on the duration of the first timer in the fourth message. In this case, a transmission procedure between the first network device and the second network device is shown in FIG. 16. In another possible case, the second message including the first response message is the third Xn interface message shown in FIG. 12. The first network device may not send the duration of the first timer to the second network device. Optionally, in this case, a sequence of sending, by the first network device, the first message including the first information to the second network device, and sending, by the second network device, the second message including the first response message to the first network device is not limited.

In some other embodiments, the first timer used by the first device is configured by the first network device for the first device, and the duration of the first timer is sent by the second network device to the first network device by using a fifth message before the duration of the first timer is configured for the first device, where the fifth message includes the duration of the first timer. For example, in an Xn setup process (Xn Setup Procedure), the second network device sends an Xn setup response (XN SETUP RESPONSE) message to the first network device, and indicates the duration of the first timer by using the XN SETUP RESPONSE message. For another example, in an NG RAN node configuration update process (NG RAN Node Configuration Update Procedure), the second network device sends an NG RAN configuration update request (NG RAN CONFIGURATION UPDATE REQUEST) message to the first network device, and indicates the duration of the first timer by using the NG RAN CONFIGURATION UPDATE REQUEST message. Optionally, in this case, the first network device may not send the duration of the first timer to the second network device. Optionally, a sequence of sending, by the first network device, the first message including the first information to the second network device and sending, by the second network device, the second message including the first response message to the first network device is not limited.

In some embodiments, the first network device may send the duration of the timer to the second network device by using the Xn interface message for a plurality of times. For a specific example, refer to the example of the fifth message. If the response message that is of the second network device and that is received by the first network device does not include a duration of a timer, the first network device determines that the duration that is of the timer and that is sent to the second network device is the duration of the first timer; or if the response message that is of the second network device and that is received by the first network device includes duration of a timer, the first network device determines that the duration that is of the timer and that is sent by the second network device is the duration of the first timer.

In some other embodiments, the first timer used by the first device is predefined. In a possible case, the second message including the first response message is not the third Xn interface message shown in FIG. 12. The second network device may generate the first response message based on the duration of the first timer, and send the second message to the first network device. The first network device may send the first response message to the first device based on the duration of the first timer, for example, send the first response message before the first timer expires. In another possible case, the second message including the first response message is the third Xn interface message shown in FIG. 12. The first network device may send the first response message to the first device based on the duration of the first timer, for example, send the first response message before the first timer expires.

S550: The first network device sends the first response message (for example, an RRCRelease message) to the first device.

In some embodiments, S550 is an optional step.

In some embodiments, after receiving the first response message, the first device stops the first timer. Optionally, the first device may wait for re-initiating the SDT subsequently.

This is not limited to the foregoing examples. In some other embodiments, if the first device still does not receive, when the first timer expires, the first response message sent by the first network device, the first device enters the RRC idle state.

For an example of the first response message, refer to the RRC response message in the SDT shown in FIG. 5 to FIG. 10.

In some embodiments, that the device may report the first information includes: The device may report the first information in the RRC inactive state. For example, that the UE may report the first information includes: The UE may report the first information in the RRC inactive state.

In the method shown in FIG. 13, the first device may send the first information to the first network device, and indicate, by using the first information, to request to stop the SDT, to avoid a case in which when the first device stops monitoring the SDT, the first network device still schedules, for the first device, a resource used for the SDT, so as to save air interface resources.

The following describes a specific implementation of S540 by using examples.

In a possible implementation, the first timer used by the first device is the first timer in the context that is of the first device and that is stored in the second network device, and the second message including the first response message is not the third Xn interface message shown in FIG. 12. In some embodiments, the first timer and the first response message may be sent to the second network device together. A specific procedure is shown in (A) in FIG. 14. In some other embodiments, the first timer may be sent to the second network device by using a third Xn interface message. A specific procedure is shown in (B) in FIG. 14.
(A) in FIG. 14 shows an example of a schematic flowchart of another transmission control method. The method includes but is not limited to the following steps.

S5411: A second network device sends a third Xn interface message to a first network device.

S5412: The first network device sends a first message including first information to the second network device.

A sequence of S5411 and S5412 is not limited. Optionally, a sequence of S530 and S540 in FIG. 13 is not limited either.

In some embodiments, S5411 is performed before S5412. For example, a first device initiates RA-SDT under the first network device. After receiving a contention resolution message or a msgB, the first device sends the first information to the first network device in a subsequent transmission phase. For another example, the first device initiates CG-SDT under the first network device. After receiving a feedback response message, the first device sends the first information to the first network device in a subsequent transmission phase. In this case, before the first network device receives the first information sent by the first device, the first network device sends a first Xn interface message to the second network device, and receives the third Xn interface message sent by the second network device. Optionally, in this case, a part of steps (for example, S5411) in S540 are performed before S530, and a part of steps (for example, S5412 and S5413) are performed after S530.

In some other embodiments, S5411 is performed after S5412. For example, the first device initiates RA-SDT under the first network device, and the first device sends the first information to the first network device before receiving a contention resolution message or a msgB. For another example, the first device initiates CG-SDT under the first network device, and the first device sends the first information to the first network device before receiving a feedback response message. In this case, the first network device may first receive the first information sent by the first device, then send a first Xn interface message to the second network device, and receive the third Xn interface message sent by the second network device. Optionally, after receiving the first information sent by the first device, the first network device may send, to the second network device, the first message including the first information, for example, a first Xn interface message such as a RetrieveUEContextRequest message. Optionally, in this case, S530 is before S540.

S5413: The second network device sends a message including a first response message and duration of a first timer to the first network device.

Specifically, a second message including the first response message is the same as a third message including the duration of the first timer, for example, an existing Xn interface message other than the third Xn interface message or a new Xn interface message.

In some embodiments, after receiving the first message, the second network device may generate the first response message based on the first information in the first message. Optionally, the second network device may alternatively generate the first response message based on the duration of the first timer and the first information. In some embodiments, the second network device may send, based on the duration of the first timer, the second message including the first response message to the first network device. Optionally, in the foregoing case, the first network device may send the first response message to the first device before the first timer expires.

In some embodiments, after receiving an Xn interface message including the first response message and the duration of the first timer, the first network device may send the first response message to the first device before the first timer expires.

In some other embodiments, the second network device may alternatively not send the duration of the first timer, but send first duration determined based on the duration of the first timer. In consideration with a case in which exchange of the Xn interface message requires some time, the first duration may be less than the duration of the first timer. Optionally, the first network device may send the first response message to the first device in the first duration after receiving the first information sent by the first device.

(B) in FIG. 14 shows an example of a schematic flowchart of another transmission control method. The method includes but is not limited to the following steps.

S5421: A second network device sends a third Xn interface message including duration of a first timer to a first network device.

S5422: The first network device sends a first message including first information to the second network device.

Descriptions of S5421 and S5422 are similar to the descriptions of S5411 and S5412 in (A) in FIG. 14, and a difference lies in that the third Xn interface message in S5421 includes the duration of the first timer. Details are not described again.

S5423: The second network device sends a second message including a first response message to the first network device.

Specifically, the second message including the first response message is different from a third message including the duration of the first timer. The third message is the third Xn interface message. The second message is an existing Xn interface message other than the third Xn interface message, a new Xn interface message, or the like.

In some embodiments, after receiving the first message, the second network device may generate the first response message based on the first information in the first message. Optionally, the second network device may alternatively generate the first response message based on the duration of the first timer. In some embodiments, the second network device may send, based on the duration of the first timer, the second message including the first response message to the first network device. Optionally, in the foregoing case, the first network device may send the first response message to a first device before the first timer expires.

In some embodiments, after receiving the second message including the first response message, the first network device may send the first response message to the first device before the first timer indicated by the third Xn interface message expires.

In some other embodiments, after receiving the second message including the first response message, the first network device may send the first response message to the first device in second duration after receiving the first information sent by the first device. In consideration with a case in which exchange of the Xn interface message requires some time, the second duration may be less than the duration of the first timer.

In another possible implementation, the first timer used by the first device is the first timer in a context that is of the first device and that is stored in the second network device, and the second message including the first response message is the third Xn interface message shown in FIG. 12. In some embodiments, the first timer may be sent to the second network device by using an Xn interface message other than the third Xn interface message. A specific procedure is shown in (A) in FIG. 15. In some other embodiments, the first timer and the first response message may be sent to the second network device together. A specific procedure is shown in (B) in FIG. 15.
(A) in FIG. 15 shows an example of a schematic flowchart of another transmission control method. The method includes but is not limited to the following steps.

S5431: A second network device sends a third Xn interface message including a first response message to a first network device.

S5432: The first network device sends a first message including first information to the second network device.

Descriptions of S5431 and S5432 are similar to the descriptions of S5411 and S5412 in (A) in FIG. 14, and a difference lies in that the third Xn interface message in S5431 includes the first response message. Details are not described again.

S5433: The second network device sends a third message including duration of a first timer to the first network device.

Specifically, a second message including the first response message is different from the third message including the duration of the first timer. The second message is the third Xn interface message, and the third message is an existing Xn interface message other than the third Xn interface message, a new Xn interface message, or the like.

In some embodiments, after receiving the third message including the duration of the first timer, the first network device may send the first response message to a first device before the first timer expires.

In some other embodiments, the second network device may alternatively not send the duration of the first timer, but send third duration determined based on the duration of the first timer. In consideration with a case in which exchange of the Xn interface message requires some time, the third duration may be less than the duration of the first timer. Optionally, the first network device may send the first response message to the first device in the third duration after receiving the first information sent by the first device.

(B) in FIG. 15 shows an example of a schematic flowchart of another transmission control method. The method includes but is not limited to the following steps.

S5441: A second network device sends a third Xn interface message including a first response message and duration of a first timer to a first network device.

S5442: The first network device sends a first message including first information to the second network device.

Descriptions of S5441 and S5442 are similar to the descriptions of S5411 and S5412 in (A) in FIG. 14, and a difference lies in that the third Xn interface message in S5441 includes the first response message and the duration of the first timer. Details are not described again.

Specifically, a second message including the first response message and a third message including the duration of the first timer are the same, and are the third Xn interface message.

In some embodiments, after receiving the third Xn interface message including the first response message and the duration of the first timer, the first network device may send the first response message to a first device before the first timer expires.

In another possible implementation, the first timer used by the first device is configured by the first network device for the first device, the duration of the first timer is generated by the first network device, and the second message including the first response message is not the third Xn interface message. A specific procedure is shown in FIG. 16.

FIG. 16 is an example of a schematic flowchart of another transmission control method. The method includes but is not limited to the following steps.

S5451: A first network device sends a fourth message including duration of a first timer to a second network device.

S5452: The first network device sends a first message including first information to the second network device.

For example, the fourth message is the first Xn interface message (for example, the RetrieveUEContextRequest message) shown in FIG. 11 and FIG. 12. When requesting a user context of a first device from the second network device, the first network device may indicate the duration of the first timer by using the first Xn interface message.

For example, the fourth message is an Xn setup request (XN SETUP REQUEST) message. In an Xn setup procedure, the first network device sends the XN SETUP REQUEST message to the second network device, and indicates the duration of the first timer by using the XN SETUP REQUEST message.

For example, the fourth message is an NG RAN CONFIGURATION UPDATE REQUEST message. In an NG RAN node configuration update procedure, the first network device sends the NG RAN CONFIGURATION UPDATE REQUEST message to the second network device, and indicates the duration of the first timer by using the NG RAN CONFIGURATION UPDATE REQUEST message.

The fourth message is not limited to the foregoing examples, and may alternatively be another existing Xn interface message, or may be a new Xn interface message.

In some embodiments, the first message may be an existing Xn interface message, and optionally, may be the first Xn interface message, for example, the RetrieveUEContextRequest message. Optionally, when the first network device requests the user context of the first device from the second network device, after receiving the first information sent by the first device, the first network device may indicate the duration of the first timer and the first information by using the first Xn interface message. In some other embodiments, the first message may alternatively be a new Xn interface message.

A sequence of S5451 and S5452 is not limited.

S5453: The second network device sends a second message including a first response message to the first network device.

In some embodiments, after receiving the first message, the second network device may generate the first response message based on the first information in the first message. In some embodiments, the second network device may send, based on the duration that is of the first timer and that is indicated by the fourth message, the second message including the first response message to the first network device. Optionally, the first network device may send the first response message to the first device before the first timer expires.

The first information is not limited to the foregoing example. In some other embodiments, the first information indicates to suspend (suspend) SDT. In some other embodiments, the first information indicates to suspend (suspend) SDT and enter an RRC connected state. Specific descriptions are similar to those of the example of the first information.

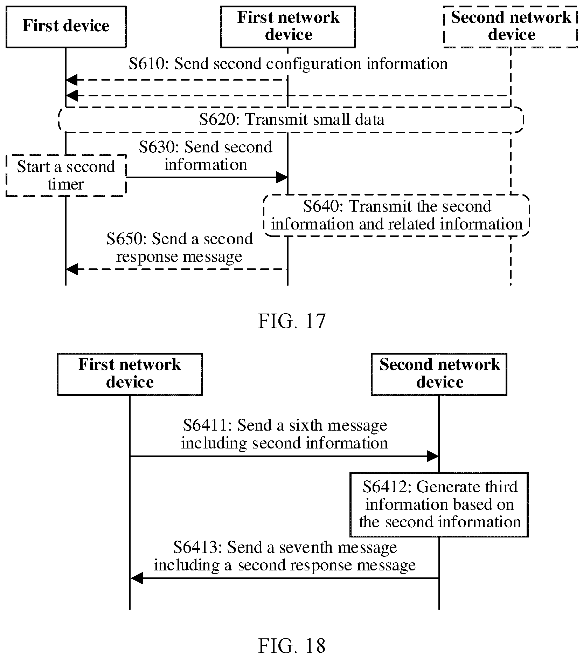

FIG. 17 is a schematic flowchart of another transmission control method according to an embodiment of this application. The method may include but is not limited to the following steps.

S610: A first device receives second configuration information.

In some embodiments, S610 is an optional step.

S610 is similar to S510 in FIG. 13. A difference lies in that in S610, the first configuration information needs to be replaced with the second configuration information, the first information needs to be replaced with the second information, and the first timer needs to be replaced with the second timer. In some embodiments, the second information indicates to request a gap (gap) configuration used for SDT. In some embodiments, the second information indicates to request to suspend the SDT. For details, refer to the descriptions of the second information in S630. For other descriptions, refer to the descriptions of S510 in FIG. 13.

S620: The first device performs SDT.

In some embodiments, S620 is an optional step.

S620 is similar to S520 in FIG. 13. For details, refer to the descriptions of S520 in FIG. 13.

S630: The first device sends the second information to a first network device.

In some embodiments, the second information indicates to request to suspend (suspend) the SDT (for example, the SDT in S620). Optionally, the requesting to suspend the SDT may alternatively be replaced with expecting to suspend the SDT. In some embodiments, the second information indicates to request the gap configuration for the SDT (for example, the SDT in S620).

In some embodiments, the first device is a multi-card terminal, the multi-card terminal includes a first subdevice, and the first device sends the second information to the first network device through the first subdevice. Optionally, the second information indicates the first subdevice to request to suspend the SDT. Optionally, the second information indicates to request to suspend the SDT of the first subdevice. Optionally, the second information indicates the first subdevice to request the gap configuration used for the SDT. Optionally, the second information indicates to request the gap configuration used for the SDT of the first subdevice.

In some embodiments, the first device is a first subdevice included in a multi-card terminal, and the first device sends the second information to the first network device. Optionally, the second information indicates the first device to request to suspend the SDT. Optionally, the second information indicates to request to suspend the SDT of the first device. Optionally, the second information indicates the first device to request the gap configuration used for the SDT. Optionally, the second information indicates to request the gap configuration used for the SDT of the first device.

In the following descriptions, an example in which the first device is the first subdevice included in the multi-card terminal is used for description.

S630 is similar to S530 in FIG. 13. A difference lies in that in S630, the first information needs to be replaced with the second information, the first timer needs to be replaced with the second timer, the first response message needs to be replaced with the second response message, and the second response message is a response message (for example, an RRCReconfiguration message) for the second information. In some embodiments, when the second timer expires, the first device does not enter an RRC idle state, but determines, based on an implementation of the first device, how to process the SDT, for example, to stop the SDT; or for another example, suspend the SDT. For descriptions of the second information, refer to the following descriptions. For other descriptions, refer to the descriptions of S530 in FIG. 13.

In some embodiments, when a second subdevice needs to send a system information request or receive a downlink message, the first device sends the second information to the first network device. Optionally, the second subdevice is in an RRC non-connected state. In some embodiments, when the multi-card terminal needs to switch from an SDT service to a service of sending a system information request or receiving a downlink message, the first device sends the second information to the first network device. This may also be referred to as that the first device sends the second information to the first network device due to a multi-card reason. For a specific example, refer to the scenario 2 in which the terminal cannot continue the SDT when the terminal and the network device perform SDT. This is not limited thereto, and may further be applied to another scenario such as the scenario 1. The downlink message is, for example, a periodic downlink message such as paging, system information, or RRM; or another non-periodic downlink message.

For example, the multi-card terminal is a smartphone, and two telephone cards, namely, the first subdevice and the second subdevice, may be installed on the smartphone. When a user transmits an instant messaging message with another terminal by using one telephone card (namely, the first subdevice) on the smartphone, for example, communicates with another terminal through the first network device by using mobile data of the first subdevice in this case. The other telephone card (namely, the second subdevice) of the smartphone needs to monitor a downlink message, for example, a paging message, sent by the network device, the smartphone cannot continue to transmit the instant messaging message through the first subdevice, and the first subdevice may send the second information to the first network device.

In a possible implementation, the second information includes the gap configuration. In some embodiments, the gap configuration may indicate a time period in which the first device stops monitoring the SDT. In some embodiments, the gap configuration is generated for a service of the second subdevice, and may indicate a time period in which the second subdevice performs data transmission.

In some embodiments, for a periodic service of the second subdevice, the gap configuration in the second information may include a start time point, duration, and a service periodicity. In some other embodiments, for an aperiodic service of the second subdevice, the gap configuration in the second information may include a start time point and duration. In some other embodiments, for services of the second subdevice, for example, a periodic service and an aperiodic service, the gap configuration in the second information may include a start time point and duration.

When the service of the second subdevice is running, the first device stops monitoring the SDT.

In some embodiments, the time period in which monitoring on the SDT is stopped may also be referred to as a time period occupied (by the second subdevice).

This is not limited to the foregoing examples. In some other embodiments, the gap configuration may alternatively indicate a time period in which the first device monitors the SDT. In this application, an example in which the gap configuration indicates the time period in which the first device stops monitoring the SDT is used for description.

In some embodiments, the first device may determine, based on an implementation of the first device, the second information to be sent. For example, if the service of the second subdevice is only a periodic service, the first device may send second information (for example, a service periodicity) corresponding to the periodic service. For another example, if the service of the second subdevice is only a non-periodic service, the first device may send second information (for example, an occupied time period) corresponding to the non-periodic service. For another example, if the service of the second subdevice includes a periodic service and a non-periodic service, the first device may calculate an occupied time period of the service, and send the occupied time period of the service to the first network device by using the second information.

S640: The first network device and a second network device transmit the second information and other related information.

In some embodiments, S640 is an optional step.

In some embodiments, the first network device corresponding to a current serving cell of the first device does not store a user context of the first device, and the user context of the first device is stored in the second network device; in other words, the first network device is a new station, and the second network device is an old station. In this case, after receiving the second information sent by the first device, the first network device forwards the second information to the second network device. Optionally, S640 is performed in a scenario in which the old station (the second network device) determines not to perform anchor relocation, and the new station (the first network device) cannot obtain the user context of the first device from the old station (the second network device). Optionally, the SDT initiated by the first device is RA-SDT. In other words, S640 is performed in a scenario in which the RA-SDT is initiated and an anchor device is not changed.

In some embodiments, the first network device and the second network device exchange information by using an Xn interface message. The following descriptions use an example in which a message exchanged between the first network device and the second network device is an Xn interface message for description.

In some embodiments, after receiving the second information sent by the first device, the first network device may send a sixth message to the second network device. The sixth message includes the second information. Optionally, the sixth message is the first Xn interface message (for example, the RetrieveUEContextRequest message) shown in FIG. 11 and FIG. 12, another existing Xn interface message, or a new Xn interface message.

In some embodiments, after sending the sixth message to the second network device, the first network device may receive a seventh message sent by the second network device. The seventh message includes the second response message, and the seventh message is used by the first network device to send the second response message to the first device before the second timer expires. For example, the seventh message is used by the first network device to perform S650. For an example of the second response message, refer to the RRC response message in the SDT shown in FIG. 5 to FIG. 10, for example, the RRCReconfiguration message. Optionally, the seventh message may be the second Xn interface message (for example, the RetrieveUEContextResponse message) shown in FIG. 11, the third Xn interface message (for example, the RetrieveUEContextFailure message) shown in FIG. 12, another existing Xn interface message, or a new Xn interface message.

In some embodiments, a message including duration of the second timer may be transmitted between the first network device and the second network device. Details are as follows:

In a possible implementation, a manner of configuring the second configuration information and the duration of the second timer is the manner 1 or the manner 4 in S610; in other words, the second timer used by the first device is configured by the first network device for the first device by using broadcast system information (for example, an SIB 1). In some embodiments, the duration of the second timer is generated by the first network device. In some other embodiments, the duration of the second timer is sent by the second network device to the first network device by using a tenth message before the duration of the second timer is configured for the first device, and the tenth message includes the duration of the second timer.

In another possible implementation, a manner of configuring the second configuration information and the duration of the second timer is the manner 2 or the manner 3 in S610; in other words, the second timer used by the first device is configured by the first network device or the second network device for the first device by using an RRC message. In some embodiments, the second timer used by the first device is the second timer in the context that is of the first device and that is stored in the second network device. In some other embodiments, the second timer used by the first device is configured by the first network device for the first device. In a possible case, the duration of the second timer is generated by the first network device. In another possible case, the duration of the second timer is sent by the second network device to the first network device by using a tenth message before the duration of the second timer is configured for the first device, and the tenth message includes the duration of the second timer.

In another possible implementation, a manner of configuring the second configuration information and the duration of the second timer is the manner 5 in S610; in other words, the duration of the second timer used by the first device is predefined, and the first network device and the second network device may not exchange the duration of the second timer.

In some embodiments, the second timer used by the first device is the second timer in the context that is of the first device and that is stored in the second network device. After receiving the second information sent by the first device, the first network device may receive an eighth message sent by the second network device. The eighth message includes the duration of the second timer. The duration of the second timer may be used by the first network device to send the second response message to the first device before the second timer expires. For example, the duration of the second timer is used by the first network device to perform S650. In a possible case, the seventh message including the second response message is not the third Xn interface message shown in FIG. 12. In this case, a transmission procedure between the first network device and the second network device is similar to that in FIG. 14. In another possible case, the seventh message including the second response message is the third Xn interface message shown in FIG. 12. In this case, a transmission procedure between the first network device and the second network device is similar to that in FIG. 15.

In some other embodiments, the second timer used by the first device is configured by the first network device for the first device, and the duration of the second timer is generated by the first network device. In a possible case, the seventh message including the second response message is not the third Xn interface message shown in FIG. 12. The first network device may send a ninth message to the second network device, where the ninth message includes the duration of the second timer. The second network device may send the seventh message to the first network device based on the duration of the second timer in the ninth message. In this case, a transmission procedure between the first network device and the second network device is similar to that in FIG. 16. In another possible case, the seventh message including the second response message is the third Xn interface message shown in FIG. 12. The first network device may not send the duration of the second timer to the second network device. Optionally, in this case, a sequence of sending, by the first network device, the sixth message including the second information to the second network device and sending, by the second network device, the seventh message including the second response message to the first network device is not limited.

In some other embodiments, the second timer used by the first device is configured by the first network device for the first device, and the duration of the second timer is sent by the second network device to the first network device by using a tenth message before the duration of the second timer is configured for the first device, where the tenth message includes the duration of the second timer. For example, in an Xn setup procedure, the second network device sends an XN SETUP RESPONSE message to the first network device, and indicates the duration of the second timer by using the XN SETUP RESPONSE message. For another example, in an NG RAN node configuration update procedure, the second network device sends an NG RAN CONFIGURATION UPDATE REQUEST message to the first network device, and indicates the duration of the second timer by using the NG RAN CONFIGURATION UPDATE REQUEST message. Optionally, in this case, the first network device may not send the duration of the second timer to the second network device. Optionally, a sequence of sending, by the first network device, the sixth message including the second information to the second network device and sending, by the second network device, the seventh message including the second response message to the first network device is not limited.

In some embodiments, the first network device may send the duration of the timer to the second network device by using the Xn interface message for a plurality of times. For a specific example, refer to the example of the tenth message. If the response message that is of the second network device and that is received by the first network device does not include a duration of a timer, the first network device determines that the duration that is of the timer and that is sent to the second network device is the duration of the first timer; or if the response message that is of the second network device and that is received by the first network device includes duration of a timer, the first network device determines that the duration that is of the timer and that is sent by the second network device is the duration of the first timer.

In some other embodiments, the second timer used by the first device is predefined. In a possible case, the seventh message including the second response message is not the third Xn interface message shown in FIG. 12. The second network device may generate the second response message based on the duration of the second timer, and send the seventh message to the first network device. The first network device may send the second response message to the first device based on the duration of the second timer, for example, send the second response message before the second timer expires. In another possible case, the seventh message including the second response message is the third Xn interface message shown in FIG. 12. The first network device may send the second response message to the first device based on the duration of the second timer, for example, send the second response message before the second timer expires.

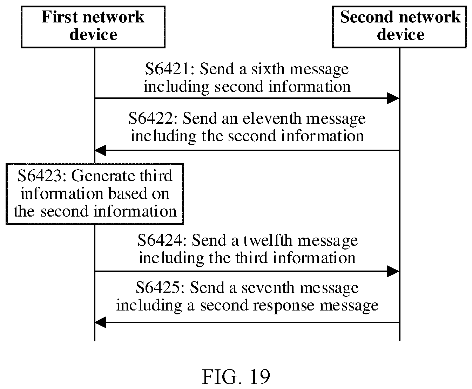

In a possible implementation, the second response message includes the third information, and the third information indicates the gap configuration. For details, refer to the descriptions of S650. Details are not described temporarily. In some embodiments, the third information is generated by the second network device based on the second information. A specific procedure is shown in FIG. 18. In some other embodiments, the third information is generated by the first network device based on the second information. A specific procedure is shown in FIG. 19.

S650: The first network device sends the second response message (for example, the RRCReconfiguration message) to the first device.

In some embodiments, S650 is an optional step.

In some embodiments, after receiving the second response message, the first device may process the SDT based on the second response message, and optionally, may stop the second timer. In some embodiments, the second response message includes the third information, and the third information indicates the gap configuration. For an example of the gap configuration, refer to the descriptions of the gap configuration included in the second information in S630.

In some embodiments, the gap configuration indicated by the third information may indicate a first time period in which the first device to stop monitoring the SDT. After receiving the second response message, the first device may stop monitoring the SDT in the first time period, and monitor the SDT (for example, execution of the SDT) in a time period other than the first time period. Optionally, the gap configuration is for the periodic service of the second subdevice. After receiving the second response message, the first device may periodically stop monitoring the SDT. In other words, the first device may stop monitoring the SDT in a service periodicity of the periodic service, and continue the SDT beyond the service periodicity. Optionally, the gap configuration is for the aperiodic service of the second subdevice. After receiving the second response message, the first device may stop monitoring the SDT in a time period occupied by the aperiodic service, and continue the SDT in another time period.

This is not limited to the foregoing examples. In some other embodiments, if the first device still does not receive, when the second timer expires, the second response message sent by the first network device, the first device may determine, based on an implementation of the first device, how to process the SDT, for example, stop the SDT; or for another example, suspend the SDT.

In some embodiments, the second response message is an RRC message, for example, an RRCReconfiguration message. This is not limited thereto. In some other embodiments, the second response message may alternatively be the RRC response message in the SDT process shown in FIG. 5 to FIG. 10. In some other embodiments, the first network device may further indicate activation and/or deactivation of the gap configuration to the first device by using a MAC CE.

This is not limited to the foregoing examples. In some other embodiments, the second timer may alternatively not be configured for the first device. For example, the second timer is not involved in S610. In a possible case, a configuration manner of the second configuration information may be sent to the first device by using broadcast system information (for example, the SIB 1). In this case, for descriptions of the second configuration information, refer to the descriptions of the second configuration information in the manner 2 of S610. In another possible case, the second configuration information may be sent to the first device by using an RRC message. In this case, for descriptions of the second configuration information, refer to the descriptions of the second configuration information in the manner 4 in S610. Optionally, when the second configuration information is sent to the first device by using the RRC message, the method may further include: The first device receives system information (for example, the SIB 1) sent (broadcast) by the first network device. The system information may indicate a current network device supports a device in reporting the second information. For example, when a value of the second information in the SIB 1 is "true", it indicates "a current base station supports a UE in reporting the second information". In addition, the first device does not use the second timer either. For example, the second timer is not involved in S630. Correspondingly, the first device may directly determine, based on an implementation of the first device, how to process the SDT, for example, stop the SDT; or for another example, suspend the SDT, and does not need to wait for the second response message based on the second timer.

In the method shown in FIG. 17, the first device may send the second information to the first network device, and indicate, by using the second information, to request to suspend the SDT or request the gap configuration used for the SDT, to avoid a case in which when the first device stops monitoring the SDT, the first network device still schedules, for the first device, a resource used for the SDT, so as to save air interface resources.

In addition, the first device may not stop the current SDT, and continue the SDT when the SDT can be performed (for example, the first device continues the SDT in a time period other than a period in which the second subdevice performs a periodic service), so that signaling overheads are reduced and transmission efficiency is improved.

In some embodiments, when determining to stop the current SDT, the first device may send the first information indicating to request to stop the SDT, and does not continue the SDT subsequently. Optionally, the first device may subsequently re-initiate new SDT. For example, the first device is the first subdevice included in the multi-card terminal, and the multi-card terminal further includes the second subdevice. The first device may stop the current SDT, and enable the second subdevice to enter an RRC connected state. Subsequently, when the second subdevice enters the non-RRC connected state, the first device may re-initiate new SDT.

In some other embodiments, when determining to suspend the current SDT, the first device may send the first information indicating to request to suspend the SDT (optionally and not to enter the RRC connected state), second information indicating to request to suspend the SDT, or second information indicating to request the gap configuration used for the SDT. In one possible case, the first device may subsequently continue the SDT. In another possible case, the first device may subsequently re-initiate new SDT. For example, the first device is the first subdevice included in the multi-card terminal, and the multi-card terminal further includes the second subdevice. The first device may suspend the current SDT, so that the second subdevice performs periodic or aperiodic data transmission (for example, the second subdevice is still in the non-RRC connected state for data transmission). In a time period other than a time period in which the second subdevice performs periodic data transmission, the first device may continue the current SDT; or after the second subdevice performs aperiodic data transmission, the first device may continue the current SDT.

The following describes a specific implementation of S640 by using an example.

In some embodiments, the third information that indicates the gap configuration and that is in the second response message is generated by the second network device based on the second information. A specific procedure is shown in FIG. 18.

FIG. 18 is an example of a schematic flowchart of another transmission control method. The method includes but is not limited to the following steps.

S6411: A first network device sends a sixth message including second information to a second network device.

In some embodiments, after receiving the second information sent by a first device, the first network device may forward the second information to the second network device.

S6412: The second network device may generate third information based on the second information in the sixth message.

In some embodiments, the second network device may generate the third information based on specific content of the second information in the sixth message. In some embodiments, the second network device generates a second response message including the third information.

In some embodiments, the second network device may generate the third information based on duration of a second timer and the second information. In some embodiments, the second network device may generate, based on the duration of the second timer, the second response message including the third information. Optionally, in the foregoing case, the first network device may send the second response message to the first device before the second timer expires.

S6413: The second network device sends a seventh message including the second response message to the first network device.

In some embodiments, the second network device may send, based on the duration of the second timer, the seventh message including the second response message to the first network device. Optionally, the first network device may send the second response message to the first device before the second timer expires.

In some embodiments, the second network device may alternatively send specific content of a gap configuration to the first network device. For example, the second network device sends an Xn interface message including the third information, and the first network device may obtain the specific content of the gap configuration based on the Xn interface message. Optionally, the first network device may perform scheduling of SDT based on the specific content of the gap configuration.

In some embodiments, after receiving the seventh message, the first network device may send the second response message to the first device before the second timer expires.

In some other embodiments, the third information that is in the second response message and that indicates the gap configuration is generated by the first network device based on the second information. A specific procedure is shown in FIG. 19.

FIG. 19 is an example of a schematic flowchart of another transmission control method. The method includes but is not limited to the following steps.

S6421: A first network device sends a sixth message including second information to a second network device.

In some embodiments, after receiving the second information of a first device, the first network device may forward the second information to the second network device.

S6422: The second network device sends an eleventh message including the second information to the first network device.

In some embodiments, the second network device may send the eleventh message including specific content of the second information to the first network device. In some embodiments, the first network device may obtain the specific content of the second information based on the eleventh message.

S6423: The first network device generates third information based on the second information.

In some embodiments, the first network device may generate the third information based on the specific content of the obtained second information.

S6424: The first network device sends a twelfth message including the third information to the second network device.

S6425: The second network device sends a seventh message including a second response message to the first network device.

In some embodiments, after receiving the twelfth message including the third information, the second network device generates the second response message including the third information. In some embodiments, the second network device may generate, based on duration of a second timer, the second response message including the third information. Optionally, in the foregoing case, the first network device may send the second response message to the first device before the second timer expires.

In some embodiments, the second network device may send, based on the duration of the second timer, the seventh message including the second response message to the first network device. Optionally, the first network device may send the second response message to the first device before the second timer expires.

For example, the sixth message is a first Xn interface message (for example, a RetrieveUEContextRequest message), and the seventh message is a second Xn interface message (for example, a RetrieveUEContextResponse message) or a third Xn interface message (for example, a RetrieveUEContextFailure message). This is not limited thereto. The sixth message may alternatively be another existing Xn interface message or a new Xn interface message. The seventh message may alternatively be another existing Xn interface message or a new Xn interface message.

For example, the eleventh message is a first Xn interface message (for example, a RetrieveUEContextRequest message), and the twelfth message is a second Xn interface message (for example, a RetrieveUEContextResponse message) or a third Xn interface message (for example, a RetrieveUEContextFailure message). This is not limited thereto. The eleventh message may alternatively be another existing Xn interface message or a new Xn interface message. The twelfth message may alternatively be another existing Xn interface message or a new Xn interface message.

It may be understood that the architecture of the communication system and the service scenario described in embodiments of this application are intended to describe the technical solutions in embodiments of this application more clearly, but constitute no limitation on the technical solutions provided in embodiments of this application. A person of ordinary skill in the art may learn that the technical solutions provided in this application are also applicable to a similar technical problem as the architecture of the communication system evolves and a new service scenario emerges. A person of ordinary skill in the art may understand that all or some of the procedures of the methods in the foregoing embodiments may be implemented by a computer program instructing hardware related to the computer program. The computer program may be stored in a computer-readable storage medium. When the computer program is executed, the procedures in the foregoing method embodiments are performed. The foregoing storage medium includes any medium that can store computer program code, such as a read-only memory (read-only memory, ROM), a random access memory (random access memory, RAM), a magnetic disk, or an optical disc.

## Claims

1. A transmission control method, applied to a first device, wherein the method comprises:
sending first information to a first network device when the first device is in a non-radio resource control RRC connected state, wherein the first information indicates to request to stop small data transmission SDT.

2. The method according to claim 1, wherein the first device is a multi-card terminal, the first device comprises a first subdevice and a second subdevice, the first subdevice and the second subdevice share a radio frequency transmission chain and/or a radio frequency reception chain, and the sending first information to a first network device comprises: sending the first information to the first network device through the first subdevice, wherein
the first information indicates the first subdevice to request to stop the SDT; or the first information indicates to request to stop the SDT of the first subdevice.

3. The method according to claim 2, wherein the sending first information to a first network device comprises: when the second subdevice needs to enter an RRC connected state from the non-RRC connected state, sending the first information to the first network device through the first subdevice;
the sending first information to a first network device comprises: when the first device needs to switch from an SDT service to an RRC connected state service, sending the first information to the first network device; or
the sending first information to a first network device comprises: sending the first information to the first network device due to a multi-card reason.

4. The method according to claim 2 or 3, wherein that the first device is in a non-radio resource control RRC connected state comprises: the first subdevice is in an RRC inactive state; and the method further comprises:
starting, by the first subdevice, a first timer when the first information is sent to the first network device; and
after the sending first information to a first network device, the method further comprises:
before the first timer expires, if a first response message sent by the first network device is received, stopping, by the first subdevice, the first timer; and
when the first timer expires, if the first response message sent by the first network device is not received, entering, by the first subdevice, an RRC idle state.

5. The method according to any one of claims 2 to 4, wherein before the sending first information to a first network device, the method further comprises:
receiving first configuration information through the first subdevice, wherein the first configuration information indicates reporting of the first information, wherein
the receiving first configuration information through the first subdevice comprises: receiving, through the first subdevice, the first configuration information sent by the first network device by using broadcast system information; the receiving first configuration information through the first subdevice comprises: receiving, through the first subdevice, the first configuration information sent by the first network device by using an RRC message; or the receiving first configuration information through the first subdevice comprises: receiving, through the first subdevice, the first configuration information sent by a second network device by using an RRC message, wherein the second network device is an anchor device that stores a user context of the first subdevice, and the first network device does not store the user context of the first subdevice; and
the first configuration information comprises duration of the first timer; or the method further comprises: receiving, through the first subdevice, duration that is of the first timer and that is sent by the first network device by using broadcast system information; the method further comprises: receiving, through the first subdevice, duration that is of the first timer and that is sent by the first network device by using an RRC message; or the method further comprises: receiving, through the first subdevice, duration that is of the first timer and that is sent by the second network device by using an RRC message, wherein the second network device is the anchor device that stores the user context of the first subdevice, and the first network device does not store the user context of the first subdevice; or the duration of the first timer is predefined, wherein the first timer is used by the first subdevice to monitor a response message for the first information.

6. The method according to claim 5, wherein before the receiving first configuration information through the first subdevice, the method further comprises:
sending a first request message through the first subdevice, wherein the first request message indicates to request to configure the reporting of the first information.

7. A transmission control method, applied to a first network device, wherein the method comprises:
receiving first information sent by a first device, wherein the first information indicates to request to stop SDT.

8. The method according to claim 7, wherein the first device is a multi-card terminal, the first device comprises a first subdevice and a second subdevice, the first subdevice and the second subdevice share a radio frequency transmission chain and/or a radio frequency reception chain, and the receiving first information sent by a first device comprises: receiving the first information sent by the first subdevice, wherein
the first information indicates the first subdevice to request to stop the SDT; or the first information indicates to request to stop the SDT of the first subdevice.

9. The method according to claim 8, wherein the first information is sent by the first subdevice to the first network device when the second subdevice needs to enter an RRC connected state from a non-RRC connected state;
the first information is sent to the first network device when the first device needs to switch from an SDT service to an RRC connected state service; or
the first information is sent by the first device to the first network device due to a multi-card reason.

10. The method according to claim 8 or 9, wherein before the receiving first information sent by a first device, the method further comprises:
sending first configuration information to the first subdevice, and/or sending duration of a first timer to the first subdevice, wherein the first configuration information indicates reporting of the first information, and the first timer is used by the first subdevice to monitor a response message for the first information, wherein
the sending first configuration information to the first subdevice comprises: sending the first configuration information to the first subdevice by using broadcast system information; or the sending first configuration information to the first subdevice comprises: sending the first configuration information to the first subdevice by using an RRC message, wherein
the first configuration information comprises the duration of the first timer; or the sending duration of a first timer to the first subdevice comprises: sending the duration of the first timer to the first subdevice by using broadcast system information; or the sending duration of a first timer to the first subdevice comprises: sending the duration of the first timer to the first subdevice by using an RRC message; or the duration of the first timer is predefined.

11. The method according to any one of claims 8 to 10, wherein after the receiving first information sent by a first device, the method further comprises:
before the first timer expires, sending a first response message to the first subdevice.

12. The method according to any one of claims 8 to 11, wherein the first network device does not store a user context of the first subdevice; and after the receiving first information sent by a first device, the method further comprises:
sending a first message to a second network device, wherein the first message comprises the first information, and the second network device is an anchor device that stores the user context of the first subdevice.

13. The method according to any one of claims 8 to 12, wherein the method further comprises:
receiving a second message sent by the second network device, wherein the second message comprises the first response message, the second network device is the anchor device that stores the user context of the first subdevice, and the second message is used by the first network device to send the first response message to the first subdevice.

14. The method according to any one of claims 8 to 13, wherein after the receiving first information sent by a first device, the method further comprises:
receiving a third message sent by the second network device, wherein the second network device is the anchor device that stores the user context of the first subdevice, the user context of the first subdevice comprises the duration of the first timer, the third message comprises the duration of the first timer, and the duration of the first timer is used by the first network device to send the first response message to the first subdevice before the first timer expires.

15. The method according to claim 13, wherein before the receiving a second message sent by the second network device, the method further comprises:
sending a fourth message to the second network device, wherein the fourth message comprises the duration of the first timer, the duration of the first timer is generated by the first network device, and the duration of the first timer is used by the second network device to send the second message to the first network device.

16. The method according to any one of claims 8 to 13, wherein before the receiving first information sent by a first device, the method further comprises:
receiving a fifth message sent by the second network device, wherein the second network device is the anchor device that stores the user context of the first subdevice, the fifth message comprises the duration of the first timer, and the duration of the first timer is used by the first network device to send the first response message to the first subdevice before the first timer expires.

17. The method according to claim 10, wherein before the sending first configuration information to the first subdevice, the method further comprises:
receiving a first request message sent by the first subdevice, wherein the first request message indicates to request to configure the reporting of the first information.

18. A transmission control method, applied to a second network device, wherein the method comprises:
receiving a first message sent by a first network device, wherein the first message comprises first information, the first information indicates a first device to request to stop SDT, the first network device does not store a user context of the first device, and the second network device is an anchor device that stores the user context of the first device.

19. The method according to claim 18, wherein the first device is a multi-card terminal, the first device comprises a first subdevice and a second subdevice, and the first subdevice and the second subdevice share a radio frequency transmission chain and/or a radio frequency reception chain; that the first network device does not store a user context of the first device comprises: the first network device does not store a user context of the first subdevice; and that the second network device is an anchor device that stores the user context of the first device comprises: the second network device is an anchor device that stores the user context of the first subdevice, wherein
the first information indicates the first subdevice to request to stop the SDT; or the first information indicates to request to stop the SDT of the first subdevice.

20. The method according to claim 19, wherein the first information is sent by the first subdevice to the first network device when the second subdevice needs to enter an RRC connected state from a non-RRC connected state;
the first information is sent to the first network device when the first device needs to switch from an SDT service to an RRC connected state service; or
the first information is sent by the first device to the first network device due to a multi-card reason.

21. The method according to claim 19 or 20, wherein before the receiving a first message sent by a first network device, the method further comprises:
sending first configuration information to the first subdevice by using an RRC message, and/or sending duration of a first timer to the first subdevice by using an RRC message, wherein the first configuration information indicates reporting of the first information, and the first timer is used by the first subdevice to monitor a response message for the first information; and
the first configuration information comprises the duration of the first timer; or the duration of the first timer is predefined.

22. The method according to any one of claims 19 to 21, wherein the method further comprises:
sending a second message to the first network device, wherein the second message comprises a first response message, and the second message is used by the first network device to send the first response message to the first subdevice.

23. The method according to any one of claims 19 to 22, wherein the method further comprises:
sending a third message to the first network device, wherein the third message comprises the duration of the first timer, and the duration of the first timer is used by the first network device to send the first response message to the first subdevice before the first timer expires.

24. The method according to claim 22, wherein before the sending a second message to the first network device, the method further comprises:
receiving a fourth message sent by the first network device, wherein the fourth message comprises the duration of the first timer, the duration of the first timer is generated by the first network device, and the duration of the first timer is used by the second network device to send the second message to the first network device.

25. The method according to any one of claims 19 to 22, wherein the method further comprises:
sending a fifth message to the first network device, wherein the fifth message comprises the duration of the first timer, the fifth message is received before the first network device receives the first information sent by the first subdevice, and the duration of the first timer is used by the first network device to send the first response message to the first subdevice before the first timer expires.

26. A network device, comprising a transceiver, a processor, and a memory, wherein the memory is configured to store a computer program, and the processor invokes the computer program to perform the method according to any one of claims 7 to 25.

27. An electronic device, comprising a transceiver, a processor, and a memory, wherein the memory is configured to store a computer program, and the processor invokes the computer program to perform the method according to any one of claims 1 to 6.

28. A computer storage medium, wherein the computer storage medium stores a computer program; and when the computer program is executed by a processor, the method according to any one of claims 1 to 25 is implemented.
